(19) Europäisches Patentamt
European Patent Office
Office européen des brevets

(11) Veröffentlichungsnummer: **0 150 676**
**B1**

(12) # EUROPÄISCHE PATENTSCHRIFT

(45) Veröffentlichungstag der Patentschrift: **12.10.88**

(51) Int. Cl.⁴: **C 09 B 56/02**, D 06 P 3/06

(21) Anmeldenummer: **84810644.9**

(22) Anmeldetag: **19.12.84**

(54) **1:2-chromkomplexfarbstoffe.**

(30) Priorität: **06.01.84 CH 53/84**

(43) Veröffentlichungstag der Anmeldung: **07.08.85 Patentblatt 85/32**

(45) Bekanntmachung des Hinweises auf die Patenterteilung: **12.10.88 Patentblatt 88/41**

(84) Benannte Vertragsstaaten: **CH DE FR GB LI**

(56) Entgegenhaltungen: **EP-A-0 079 858**

(73) Patentinhaber: **CIBA- GEIGY AG, Klybeckstrasse 141, CH- 4002 Basel (CH)**

(72) Erfinder: **Beffa, Fabio, Dr., Burgstrasse 38, CH- 4125 Riehen (CH)**

**EP 0 150 676 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Es sind bereits z. B. aus der EP-A-0 079 858 Metallkomplexe von Azofarbstoffen enthaltend ein 2-(4-N-Acetoacetylaminophenyl)-benzthiazol als Kupplungskomponente bekannt.

Gegenstand der vorliegenden Erfindung sind 1 : 2-Chromkomplexfarbstoffe der Formel I

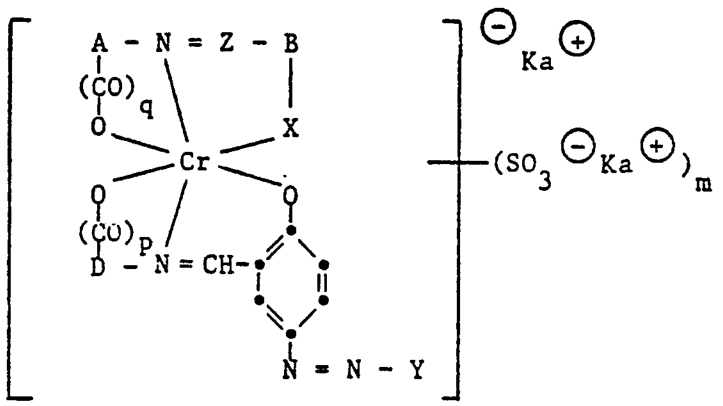

(I)

worin

Z Stickstoff oder eine CH-Gruppe,

A einen Rest der Benzol- oder Naphthalinreihe, welcher in o-Stellung zur Azo- oder Azomethingruppe eine Hydroxy- oder Carboxygruppe trägt,

D den Rest eines o-Aminophenols oder, falls p = 1 ist, den Rest einer aliphatischen, cycloaliphatischen oder aromatischen Aminocarbonsäure,

B den Rest einer Kupplungskomponente, wenn Z Stickstoff ist, wobei die Kupplungskomponente in o- bzw. α-Stellung zur Azogruppe die Gruppe X enthält, oder den Rest eines o-Hydroxybenzaldehyds oder o-Hydroxynaphthaldehyds, wenn Z die CH-Gruppe darstellt

X Sauerstoff oder, wenn Z Stickstoff ist, auch eine Gruppe der Formel -NR-, worin R Wasserstoff oder eine $C_1$-$C_4$-Alkylgruppe bedeutet,

Y einen Rest der Formel II

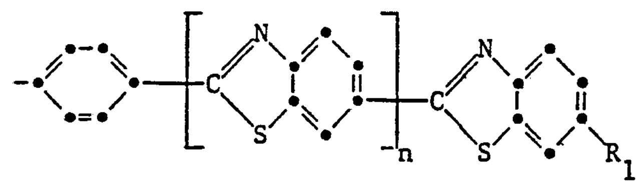

(II)

oder der Formel III

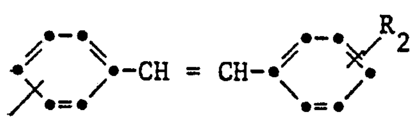

(III)

wobei

n 0 oder 1,

$R_1$ Wasserstoff oder Methyl und

$R_2$ Wasserstoff, Nitro, Chlor, $C_1$-$C_4$-Alkyl, $C_1$-$C_4$-Alkoxy oder Acetylamino,

m eine ganze Zahl von 1 bis 6, p 0 oder 1,

q 0 oder 1 und

Ka⊕ ein Kation bedeutet.

Die erfindungsgemässen Farbstoffe der Formel I enthalten 1 bis 6 Sulfogruppen. Diese befinden sich in den Resten A, B, Y oder D.

Bevorzugt sind Verbindungen der Formel I, welche 2 bis 4 Sulfogruppen enthalten.

In den erfindungsgemässen Chromkomplexfarbstoffen der obigen Formel I kann der Rest A noch einen oder mehrere weitere Substituenten tragen, z. B. niedermolekulares Alkyl oder Alkoxy, Halogen, wie z. B. Chlor oder Brom, Nitro, Cyano, Sulfo, Carboxy, Phosphono, Alkylsulfonyl, wie z. B. Methylsulfonyl, Sulfamide, wie z. B. Sulfamid oder N-Methylsulfamid, oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit "Acylamino" werden niedermolekulare Alkanoylamino-, Alkylsulfonylamino- und Alkoxycarbonylaminoreste

sowie Aroylamino- und Arylsulfonylaminoreste bezeichnet.

Der Rest A leitet sich beispielsweise von folgenden Aminen ab:

Anthranilsäure, 4- oder 5-Chloranthranilsäure, 4- oder 5-Sulfoanthranilsäure, 2-Amino-3-naphthoesäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-, 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Sulfonamido-2-amino-1-hydroxybenzol, 1-Hydroxy-2-aminobenzol-4-sulfoanthranilid, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 2-Amino-1-hydroxybenzol-4- oder -5-sulfonsäure, 4-Nitro-2-amino-1-hydroxybenzol-6-sulfonsäure, 6-Nitro-2-amino-1-hydroxybenzol-4-sulfosäure, 4-Chlor-2-amino-1-hydroxybenzol-6-sulfosäure, 1-Amino-2-hydroxynaphthalin-4-sulfosäure, 1-Anino-2-hydroxy-6-nitronaphthalin-4-sulfosäure, 1-Amino-2-hydroxy-6-chlornaphthalin-4-sulfosäure, 1-Amino-2-hydroxynaphthalin-4,6-disulfosäure, 2-Amino-1-hydroxybenzol-4,6-disulfosäure.

Statt der oben genannten Amine mit Hydroxygruppen kommen für A auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-sulfosäure, oder tosyliertes 1-Hydroxy-2-aminobenzol, wobei die Methoxy- oder O-Tosylgruppe vor oder bei der Metallisierung in eine OH-Gruppe umgewandelt wird. Verbindungen mit diesen Gruppen werden vor allem dann eingesetzt, wenn die entsprechenden 1-Hydroxy-2-amino-verbindungen schlecht kuppeln.

In bevorzugten Farbstoffen der formel I bedeutet A den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Halogen, wie Brom oder insbesondere Chlor, Nitro oder Sulfo substituiert ist.

Der Rest B leitet sich vorzugsweise von folgenden Gruppen von Kupplungskomponenten ab: gegebenenfalls durch niedermolekulares Alkyl oder Alkoxy, Dialkylamino, oder Acylamino substituierte, in o-Stellung kuppelnde Phenole, wobei Acylamino $C_1$-$C_C$-Alkanoylamino-, $C_1$-$C_4$-Alkylsulfonylamino-, $C_1$-$C_4$-Alkoxycarbonylamino-, Aroylamino- oder Arylsulfonylaminoreste bedeutet; Naphthole, die gegebenenfalls mit $C_1$-$C_4$-Alkyl oder Alkoxy, Chlor, Amino, Acylamino oder Sulfo substituiert sind, wobei Acylamino dieselbe Bedeutung hat, die vorne angegeben ist; 5-Pyrazolone oder 5-Aminopyrazole, vorzugsweise solche, die in 1-Stellung einen gegebenenfalls mit Chlor, Nitro, $C_1$-$C_4$-Alkyl- oder -Alkoxygruppen oder Sulfogruppen substituierten Phenyl- oder Naphthylrest besitzen und in 3-Stellung eine $C_1$-$C_4$-Alkyl- oder Carboxygruppe, insbesondere eine Methylgruppe aufweisen; Naphthylamine, die gegebenenfalls mit Sulfo-, Sulfonamido- oder Sulfongruppen substituiert sind; Acetessigsäureamide, vor allem Acetessigsäureanilide, und Benzoylessigsäureanilide, die im Anilidkern gegebenenfalls mit Chlor, Brom, Nitro, $C_1$-$C_4$-Alkyl- oder Alkoxy- oder Sulfogruppen substituiert sein können; 6-Hydroxy-3-cyano- oder 6-Hydroxy-3-carbonamido-4-alkyl-2-pyridone, die in 1-Stellung durch gegebenenfalls substituiertes $C_1$-$C_4$-Alkyl, z. B. Methyl, Isopropyl, β-Hydroxyethyl, β-Aminoethyl oder γ-Isopropoxypropyl oder durch Phenyl substituiert sind, und in 4-Stellung eine $C_1$-$C_4$-Alkylgruppe, insbesondere Methyl, tragen können, oder Hydroxychinoline.

Beispiele solcher Kupplungskomponenten sind:

2-Naphthol, 1-Naphthol, 1-Acetylamino-7-naphthol, 1-Propionylamino-7-naphthol, 1-Carboxymethoxyamino-7-naphthol, 1-Carboethoxyamino-7-naphthol, 1-Carbopropoxyamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 1-Naphthol-3,6- oder -4,8-disulfosäure, 2-Naphthol-6,8-disulfosäure, 4-Methyl-1-naphthol, 4-Methoxy-1-naphthol, 4-Acetyl-1-naphthol, 5,8-Dichlor-1-naphthol, 5-Chlor-1-naphthol, 2-Naphthylamin, 2-Naphthylamin-1-sulfosäure, 1-Naphthylamin-4- oder -5-sulfosäure, 2-Aminonaphthalin-6-sulfosäure, 2-Aminonaphthalin-5-sulfosäure, 6-Methylsulfonyl-2-aminonaphthalin, 1-Phenyl-3-methyl-pyrazol-5-on, 1-Phenyl-5-pyrazolon-3-carbonsäureamid, 1-(2'-,3'- oder 4'-Methylphenyl)-3-methylpyrazol-5-on, 1-(2'- 3'-oder 4'-Sulfophenyl)-3-methylpyrazol-5-on, 1-(2'-Chlor-5'-sulfophenyl)-3-methylpyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2',5'- oder 3',4'-Dichlorphenyl)-3-methylpyrazol-5-on, 1-(2',5'-Dichlor-4'-sulfophenyl)-3-methylpyrazol-5-on, 1-(2'-, 3'- oder 4'-Sulfophenyl)-3-methyl-5-aminopyrazol, 1-Phenyl-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluidid, Acetoaceto-o-chloranilid, Acetoacet-m-xylidid, Tetralol, 4-Methylphenol, 3-Dialkylaminophenole, besonders 3-Dimethylamino- und 3-Diethylaminophenol, 4-Butylphenol, vorzugsweise 4-tert.-Butylphenol, 4-Amylphenol, insbesondere 4-t-Amylphenol, 2-Isopropyl-4-methylphenol, 2- oder 3-Acetylamino-4-methylphenol, 2-Methoxycarbonylamino-4-methylphenol, 2-Ethoxycarbonylamino-4-methylphenol und 3,4-Dimethylphenol, 1-Methyl-3-cyano-4-ethyl-6-hydroxypyridon, 1-Methyl-3-cyano-4-methyl-6-hydroxypyridin, 1-Phenyl-3-carbonamido-4-methyl-6-hydroxypyridon, 1-Ethyl-4-hydroxy-2-chinolon, 2,4-Dihydroxychinolin oder 3-Methylpyrazol-5-on.

Vorzugsweise stellt die Kupplungskomponente B ein gegebenenfalls durch Amino und/oder Sulfo substituiertes 1- oder 2-Naphthol, 1- oder 2-Naphthylamin, gegebenenfalls substituiert durch Sulfo, oder ein p-alkyl($C_1$-$C_6$)-phenol, 1-Phenyl-3-methyl-5-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann.

Sofern Z die CH-Gruppe ist, stellt B den Rest eines o-Hydroxybenzaldehyds oder o-Hydroxynaphthaldehyds dar, welcher durch niedrigmolekulares Alkyl, Halogen, Sulfo, Phenylazo, Sulfophenylazo, Naphthylazo oder Sulfonaphthylazo substituiert sein kann. Geeignete Aldehyde sind beispielsweise:

2-Hydroxy-1-naphthaldehyd, 1-Hydroxy-2-naphthaldehyd, 2-Hydroxy-benzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, 5-(Phenylazo)-2-hydroxybenzaldehyd, 5-(2'-, 3'- oder 4'-Sulfophenylazo)-2-hydroxybenzaldehyd, 5-(6'-Sulfonaphthyl-1'-azo)-2-hydroxybenzaldehyd oder 5-(4''-Sulfo-4'-phenylazo)-phenylazo-2-hydroxybenzaldehyd.

Der Rest D leitet sich beispielsweise von folgenden Aminen ab:

2-Amino-1-hydroxybenzol, 4-Chlor- und 4,6-Dichlor-2-amino-1-hydroxybenzol, 4- oder 5-Nitro-2-amino-1-hydroxybenzol, 4-Chlor- und 4-Methyl-6-nitro-2-amino-1-hydroxybenzol, 6-Acetylamino- und 6-Chlor-4-nitro-2-amino-1-hydroxybenzol, 4-Sulfonamido-2-amino-1-hydroxybenzol, 4-Methylsulfonyl-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 4-Chlor- und 4-Methyl-5-nitro-2-amino-1-hydroxybenzol, 3,4,6-Trichlor-2-amino-1-hydroxybenzol, 4,6-Dinitro-2-amino-1-hydroxybenzol, 2-Amino-1-hydroxybenzol-4- oder -5-sulfosäure, 2-Amino-1-hydroxybenzol-4,6-disulfosäure, 4-Nitro-2-amino-1-hydroxybenzol-6-sulfosäure, 6-Nitro-2-amino-1-hydroxybenzol-4-sulfosäure, 6-Chlor-2-amino-1-hydroxybenzol-4-sulfosäure, 4-Chlor-2-amino-1-hydroxybenzol-6-sulfosäure, 4-Methylsulfonyl-5-nitro-2-amino-1-hydroxybenzol, 4-Methylsulfonyl-6-nitro-2-amino-1-hydroxybenzol, 6-Methyl-2-amino-1-hydroxybenzol-4-sulfosäure.

Falls p = 1 ist, ist D der Rest einer Aminocarbonsäure, beispielsweise der Rest von Anthranilsäure, 4- oder 5-Chloranthranilsäure, 4- oder 5-Sulfoanthranilsäure, Glykokoll, α-Alanin, β-Alanin, Phenylglycin, Phenylalanin, 2-Aminoisobuttersäure oder 2-Aminocyclohexancarbonsäure.

In bevorzugten Farbstoffen ist D der Rest eines 1-Hydroxy-2-aminobenzols, welches gegebenenfalls durch Nitro, Sulfo, Chlor, Methyl oder Methoxy weitersubstituiert ist.

Die erfindungsgemässen Farbstoffe der Formel I enthalten einen Rest Y der Formel II

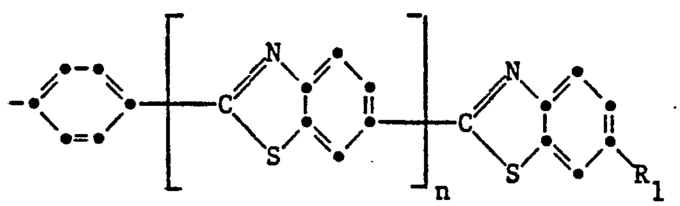

(II)

oder der Formel III

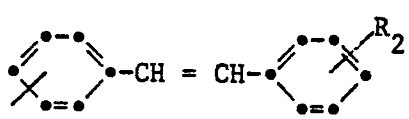

(III)

wobei

n 0 oder 1,

$R_1$ Wasserstoff oder Methyl und

$R_2$ Wasserstoff, Nitro, Chlor, $C_1$-$C_4$-Alkyl, $C_1$-$C_4$-Alkoxy oder Acetylamino ist.

Die Reste der Formeln II und III können eine oder mehrere Sulfogruppen tragen. Bei dem Rest der Formel II bedeutet $R_1$ vorzugsweise Methyl. Die bevorzugte Bedeutung von n ist 0, normalerweise liegen die Farbstoffe der Formel I, welche einen Rest Y der Formel II enthalten, jedoch als Mischungen aus Verbindungen, bei denen n = 0 ist, mit einem Anteil an Verbindungen, bei denen n = 1 ist, vor. Dies ist durch die Synthese bedingt, bei der üblicherweise von Dehydrothio-p-toluidin ausgegangen wird, welches als Nebenprodukt Bis-dehydro-thiop-toluidin (Primulinbase) enthält.

Bei dem Rest Y der Formel II bedeutet $R_2$ vorzugsweise Wasserstoff, Nitro, Chlor, Methoxy oder Acetylamino, wobei Wasserstoff und Nitro besonders bevorzugt sind.

Geeignete Reste der Formel Y leiten sich beispielsweise von folgenden Aminen ab: Dehydrothio-p-toluidin (6-Methyl-2-(4'-aminophenyl)-benzthiazol), Dehydrothio-p-toluidin-7-sulfosäure, Dehydrothio-p-toluidin-3'-sulfosäure, Dehydrothio-p-toluidin-5,7-disulfosäure, Dehydrothio-p-toluidin-7,3'-disulfosäure, Primulinbase, 2-(4'-Aminophenyl)-benzthiazol sowie Sulfosäuren der beiden letztgenannten Verbindungen, 4-Aminostilben, 4-Aminostilben-2-sulfosäure, 4-Aminostilben-2'-sulfosäure, 4-Aminostilben-2,2'-disulfosäure, 4-Amino-4'-nitrostilben, 4-Amino-4'-nitrostilben-2,2'-disulfosäure, 4-Amino-4'-chlorstilben, 4-Amino-2'-chlorstilben, 4-Amino-4'-chlorstilben-2-sulfosäure, 4-Amino-4'-chlorstilben-2,2'-disulfosäure, 4-Amino-4'-methylstilben, 4-Amino-2',4'-dimethylstilben, 4-Amino-4'-methoxystilben-2-sulfosäure, 4-Amino-3',4'-dimethoxystilben-2-sulfosäure sowie 4-Amino-4'-acetylaminostilben-2-sulfosäure.

Bevorzugt unter diesen sind Dehydrothio-p-toluidin, Dehydrothio-p-toluidin-7-sulfosäure, 4-Aminostilben-2-sulfosäure sowie 4-Amino-4'-nitrostilben-2,2'-disulfosäure.

Besonders bevorzugte erfindungsgemässe Farbstoffe entsprechen der Formel IV

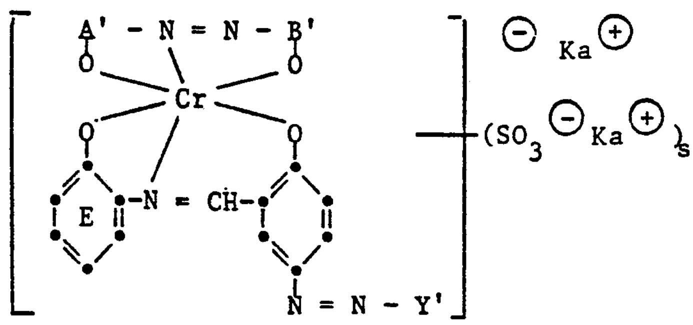 (IV)

worin

A' den Rest eines 1-Hydroxy-2-aminobenzols, welcher gegebenenfalls durch Halogen, Nitro, Sulfo, niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist,

B' ein gegebenenfalls durch Amino und/oder Sulfo substituiertes 1- oder 2-Naphthol, 1- oder 2-Naphthylamin, gegebenenfalls substituiert durch Sulfo, oder ein p-Alkyl($C_1$-$C_6$)-phenol, 1-Phenyl-3-methyl-5-pyrazolon oder Acetessigsäureanilid bedeutet, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann,

Y' einen Rest der Formel V

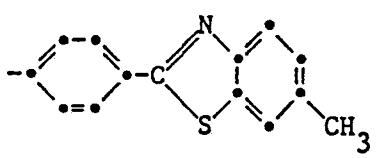 (V)

oder der Formel VI

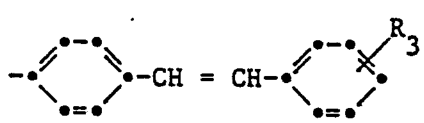 (VI)

worin $R_3$ Wasserstoff, Nitro, Chlor, Methoxy, Methyl oder Acetylamino ist, wobei die Reste V und VI eine oder zwei Sulfogruppen aufweisen können,

s 2, 3 oder 4 und

Ka⊕ ein Kation bedeutet, wobei der Ring

E gegebenenfalls substituiert ist durch Nitro, Chlor, Methyl, Methoxy oder Sulfo.

Die erfindungsgemässen Farbstoffe der Formel I können nach an sich bekannten Methoden hergestellt werden, beispielsweise, indem man den 1 : 1-Chromkomplex des Azo- oder Azomethinfarbstoffes der Formel VII

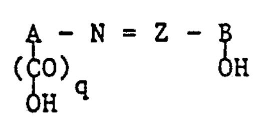 (VII)

herstellt und diesen dann mit dem Farbstoff der Formel VIII

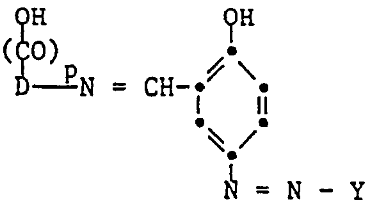

(VIII)

oder vorzugsweise mit einem Gemisch des Amins der formel IX

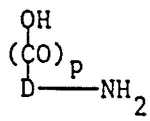

(IX)

und des Aldehyds der Formel X

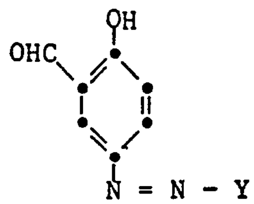

(X)

umsetzt.

In den Formeln VII bis X weisen A, Z, B, D, Y, p und q die unter der Formel I angegebene Bedeutung auf.

Die Herstellung des 1 : 1-Chromkomplexes wird nach an sich bekannten Methoden, vorzugsweise in saurer Lösung mit Chrom-III-salzen durchgeführt. Anschliessend wird der 1 : 1-Chromkomplex in schwach saurem, neutralem oder schwach alkalischem Medium zum 1 : 2-Chromkomplex umgesetzt.

Die nach dem obigen Verfahren erhältlichen neuen Metallkomplexfarbstoffe der Formel I werden in Form ihrer Salze, insbesondere Alkali-, vor allem Natrium- oder Lithiumsalze, oder auch Ammoniumsalze oder Salze von organischen Aminen mit positiv geladenem Stickstoffatom isoliert und eignen sich zum Färben und Bedrucken verschiedener Stoffe, vor allem aber zum Färben und Bedrucken stickstoffhaltiger Materialien, insbesondere von Leder. Farbstoffe mit 1 bis 3 Sulfogruppen eignen sich ausserdem auch zum Färben von Seide, Wolle, sowie auch für synthetische Fasern aus Polyamiden oder Polyurethanen.

Man erhält orange oder braune bis olive Färbungen mit guten Echtheiten, insbesondere Licht- und Nassechtheiten.

Die bevorzugte Verwendung der erfindungsgemässen Farbstoffe liegt im Färben von Pelzen oder Leder, wobei alle Ledersorten geeignet sind, z. B. Chromleder, nachgegerbtes Leder oder Veloursleder von Ziege, Rind oder Schwein. Die erfindungsgemässen Farbstoffe mit 4 bis 6 Sulfogruppen eignen sich besonders zum Färben von Veloursleder, da sie gut egalisieren und gut eindringen.

Die nachfolgenden Beispiele dienen der Erläuterung der Erfindung, ohne sie darauf zu beschränken. Teile bedeuten Gewichteile und Prozente Gewichtsprozente. Die Temperaturen sind in Grad Celsius angegeben.

**Beispiel 1**

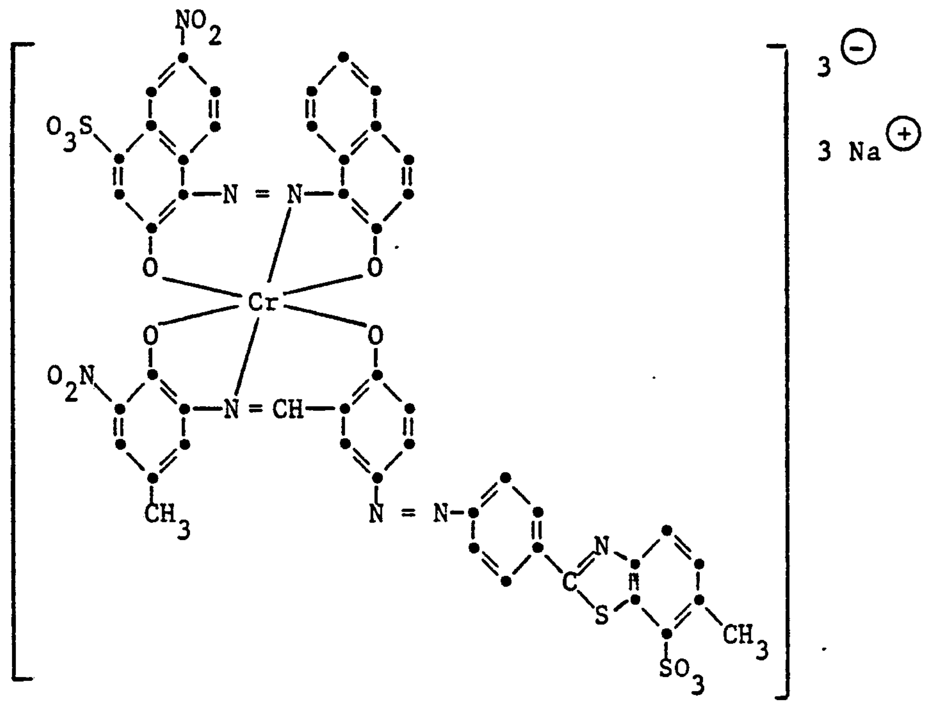

In 600 Teilen Wasser suspendiert man 48,9 Teile der komplexen Chromverbindung vom Typus 1 Atom Chrom: 1 Molekül Farbstoff, welche 5,2 Teile Chrom und 43,9 Teile Monoazofarbstoff aus diazotierter 6-Nitro-1-amino-2-hydroxynaphthalin-4-sulfonsäure und 2-Hydroxynaphthalin enthält, mit 16,8 Teilen 6-Nitro-4-methyl-2-amino-1-hydroxybenzol und 45,3 Teilen des Monoazofarbstoffes aus diazotierter Dehydrothio-p-toluidin-7-sulfonsäure und Salicylaldehyd. Das Reaktionsgemisch wird hierauf auf 80 bis 85° erwärmt, mit 5n Natriumhydroxid wird der pH-Wert auf 7 bis 7,5 gestellt und das Reaktionsgemisch so lange bei dieser Temperatur und konstantem pH gehalten, bis die Ausgangsprodukte verschwunden sind. Nach beendeter Anlagerungsreaktion wird der Farbstoff durch Zugabe von Natriumchlorid ausgefällt, filtriert und getrocknet. Nach dem Trocknen stellt er ein dunkles Pulver dar, das sich in Wasser mit brauner Farbe löst und Wolle, Polyamidmaterial und Leder in braunen Tönen von guten Echtheiten färbt.

**Beispiel 2**

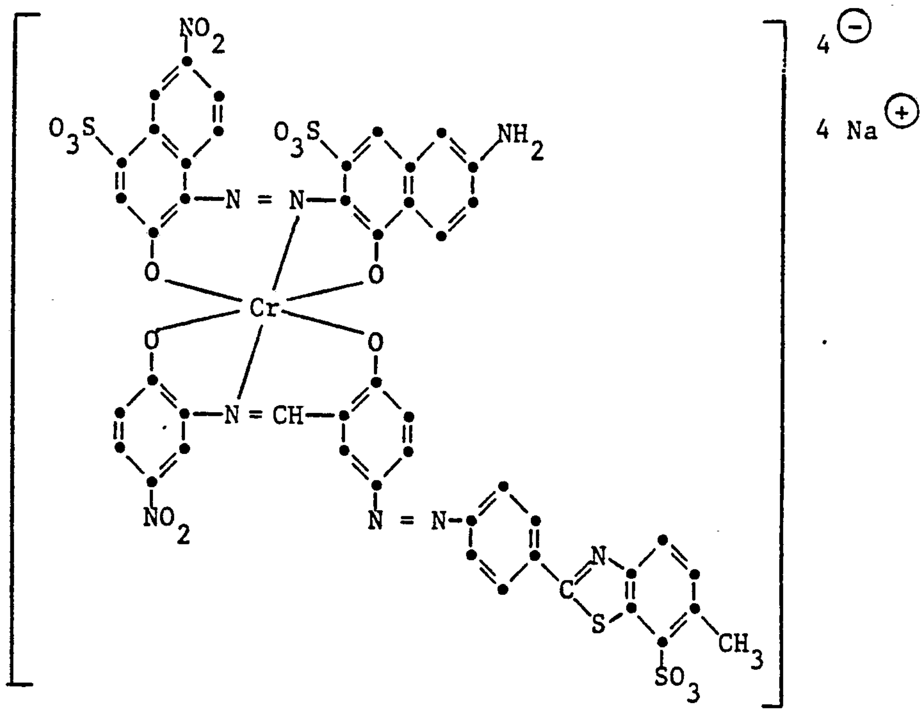

Der 1 : 1-Chromkomplex, der 53,4 Teile des Farbstoffes aus diazotierter 6-Nitro-1-amino-2-hydroxynaphthalin-4-sulfonsäure und 2-Amino-5-hydroxynaphthalin-7-sulfonsäure sowie 5,2 Teile Chrom enthält, wird in 600 Teile Wasser eingetragen und mit 15,4 Teilen 4-Nitro-2-amino-1-hydroxybenzol und 45,3 Teilen des Monoazofarbstoffes aus diazotierter Dehydrothio-p-toluidin-7-sulfonsäure und Salicylaldehyd versetzt. Das Reaktionsgemisch wird hierauf auf 80 bis 85° erwärmt, mit Natriumhydroxid auf pH 7 gestellt und so lange bei dieser Temperatur und konstantem pH gehalten, bis die Ausgangsprodukte nicht mehr nachweisbar sind. Nach beendeter Reaktion wird der Farbstoff durch Eindampfen isoliert. Man erhält ein dunkles Pulver, das sich in Wasser mit olivegrüner Farbe löst und Leder in oliven, echten Tönen färbt.

**Beispiel 3**

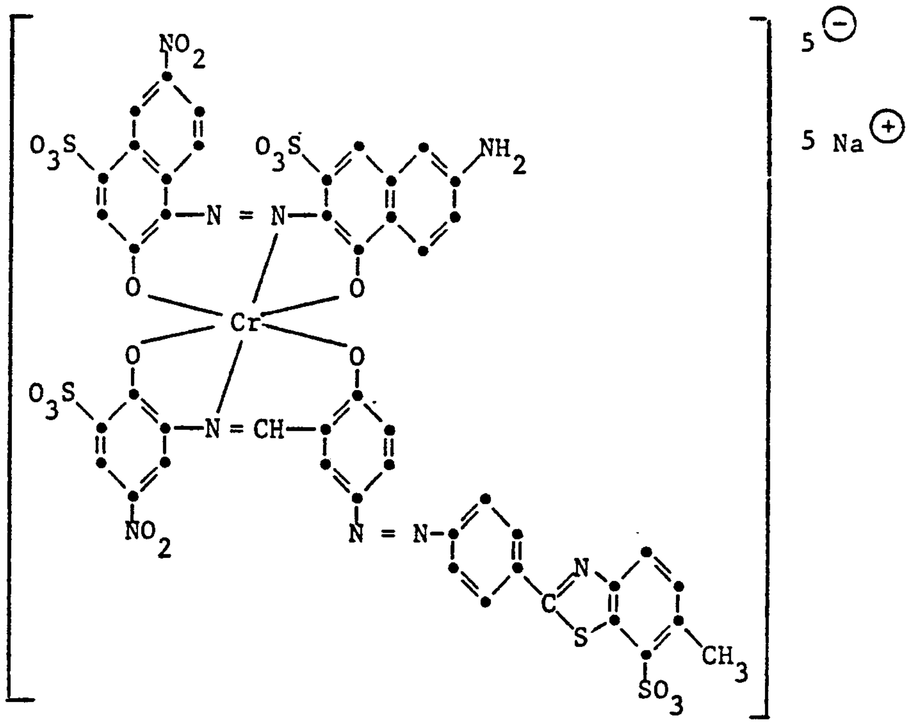

In 500 Teilen Wasser suspendiert man 58,4 Teile der komplexen Chromverbindung vom Typus 1 Atom Chrom: 1 Molekül Farbstoff, welche 5,2 Teile Chrom und 53,4 Teile Monoazofarbstoff aus 6-Nitro-1-amino-2-hydroxynaphthalin-4-sulfonsäure und 2-Amino-5-hydroxynaphthalin-7-sulfonsäure enthält, mit 23,4 Teilen 4-Nitro-2-amino-1-hydroxybenzol-6-sulfonsäure und 45,3 Teilen des Monoazofarbstoffes aus diazotierter Dehydrothio-p-toluidin-7-sulfonsäure und Salicylaldehyd.

Das Reaktionsgemisch wird auf 80 bis 85° erwärmt, mit 5n Natriumhydroxid wird ein pH-Wert von 7 bis 7,5 eingestellt und das Reaktionsgemisch so lange bei dieser Temperatur und konstantem pH gehalten, bis die Anlagerungsreaktion beendet ist. Hierauf isoliert man den chromhaltigen Farbstoff durch Sprühtrocknung.

Man erhält ein dunkles Pulver, das sich in Wasser mit grün-oliver Farbe löst und Leder in oliven, echten Tönen färbt.

Beispiel 4

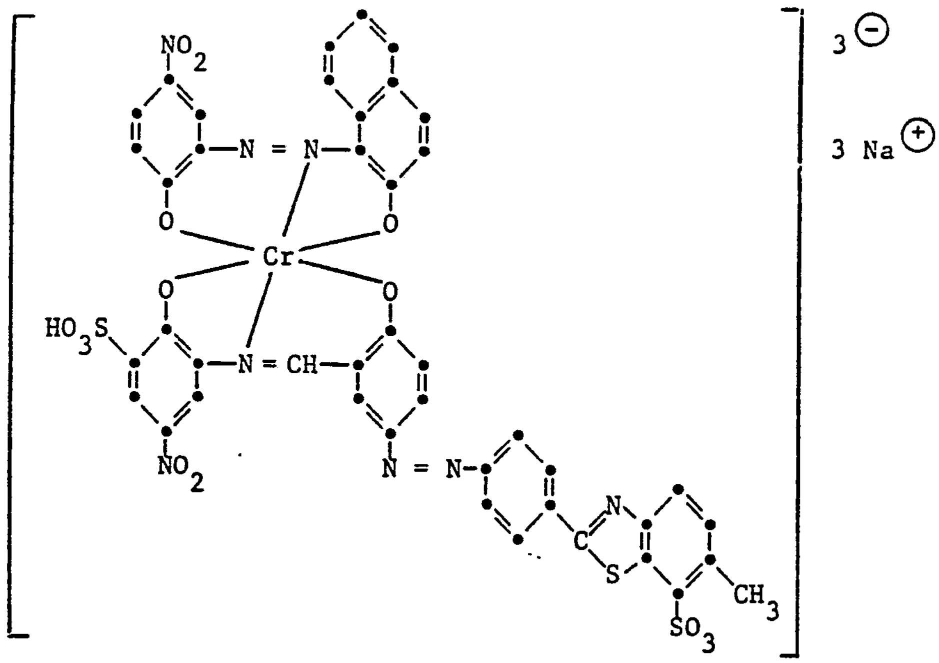

30,9 Teile des Monoazofarbstoffes aus diazotiertem 4-Nitro-2-amino-1-hydroxybenzol und 2-Hydroxynaphthalin werden mit 26,7 Teilen Chromchloridhexahydrat in 400 Volumenteilen Äthylenglykol so lange bei 120 bis 125° gerührt, bis kein unchromierter Farbstoff mehr nachweisbar ist. Die erhaltene Lösung des 1 : 1-Chromkomplexes wird hierauf bei 80 bis 85° mit 23,4 Teilen 4-Nitro-2-amino-1-hydroxybenzol-6-sulfonsäure und 45,3 Teilen Monoazofarbstoff aus diazotierter Dehydrothio-p-toluidin-7-sulfonsäure und Salicylaldehyd versetzt und so lange bei dieser Temperatur gehalten, bis die Anlagerungsreaktion beendet ist. Gleichzeitig wird der pH-Wert des Reaktionsgemisches durch Zugabe von 5n Natronlauge auf 7 bis 7,5 gestellt und gehalten. Nach beendeter Reaktion wird der chromhaltige Farbstoff durch Zugabe von gesättigter Natriumchloridlösung ausgeschieden, abfiltriert und getrocknet. Er stellt ein dunkles Pulver dar, das sich in Wasser mit brauner Farbe löst und Wolle, Polyamidmaterial sowie Leder in braunen Tönen von guten Echtheiten färbt.

Arbeitet man wie in den Beispielen 1 bis 4 beschrieben, verwendet jedoch den 1 : 1-Chromkomplex des in der folgenden Tabelle in Spalte 2 aufgeführten Azofarbstoffes und setzt diesen mit dem in Spalte 3 aufgeführten Azomethinfarbstoff, bzw. mit dem diesen bildenden Amin und Aldehyd um, so erhält man 1 : 2-Chromkomplexe, welche Leder in der in Spalte 4 angegebenen Nuance färben.

**Tabelle**

| N° | Azofarbstoff | Azomethinfarbstoff | Nuance |
|---|---|---|---|
| 1 | 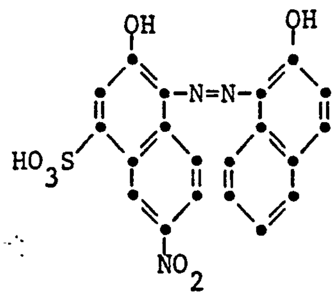 | 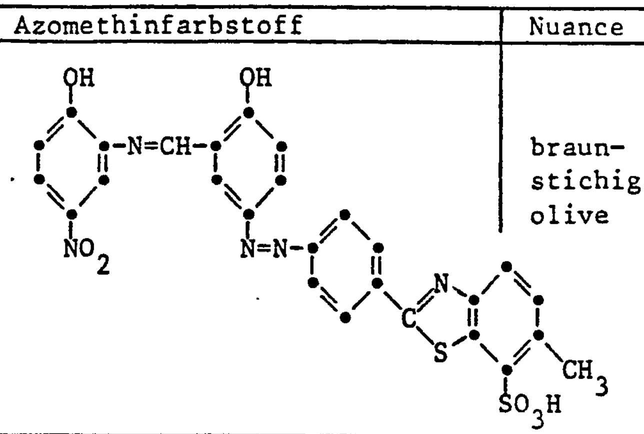 | braun-stichig olive |
| 2 | 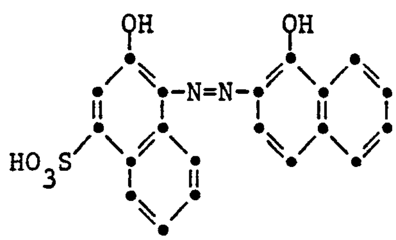 | do | olive |
| 3 | 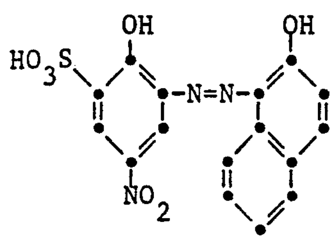 | do | braun-stichig olive |
| 4 | 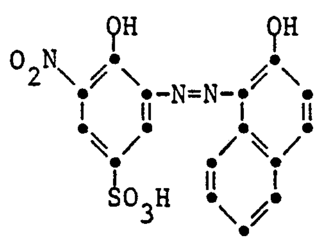 | do | olive-stichig braun |

| N° | Azofarbstoff | Azomethinfarbstoff | Nuance |
|---|---|---|---|
| 5 | 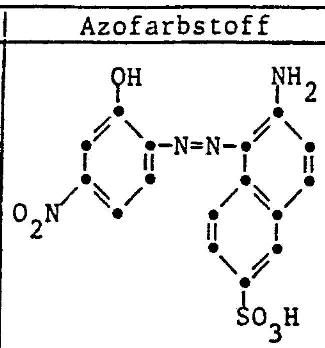 | 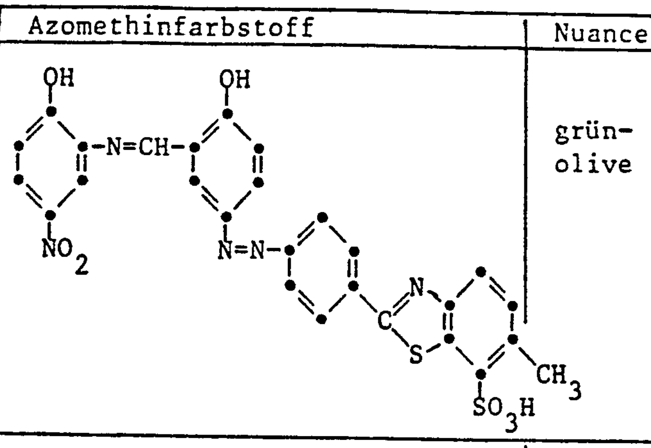 | grün-olive |
| 6 | 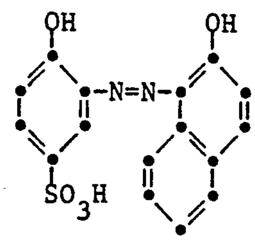 | do | olive-stichig braun |
| 7 | 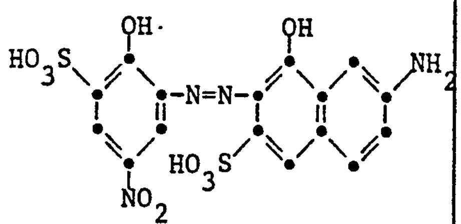 | do | olive |
| 8 | 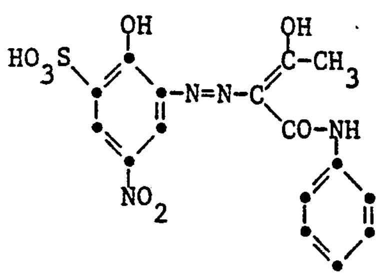 | do | orange-stichig gelb |
| 9 | 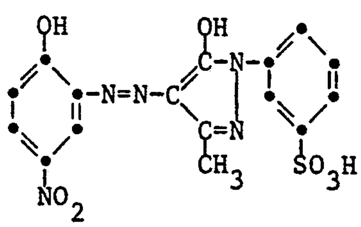 | do | orange |
| 10 | 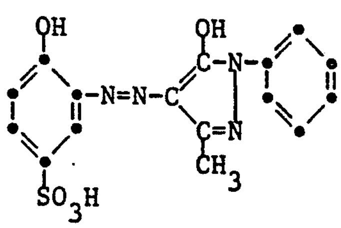 | do | orange |

| N° | Azofarbstoff | Azomethinfarbstoff | Nuance |
|---|---|---|---|
| 11 | 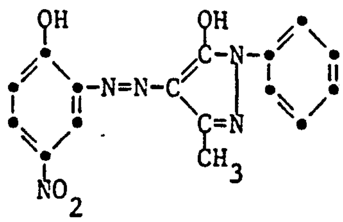 | 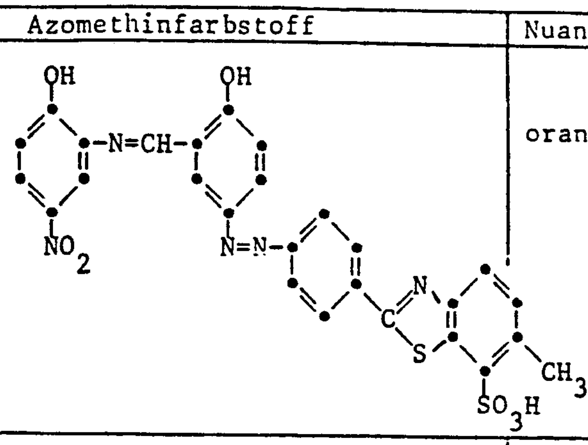 | orange |
| 12 | 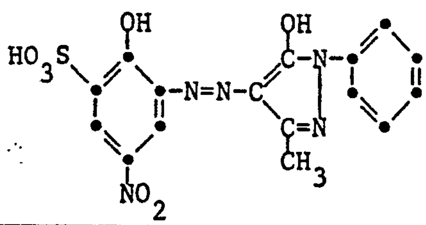 | do | orange |
| 13 | 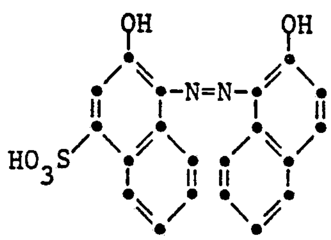 | do | olive |
| 14 | 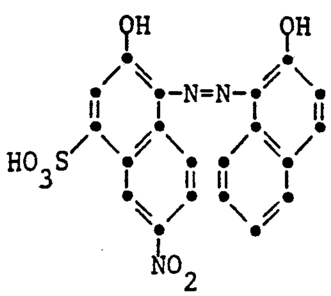 | 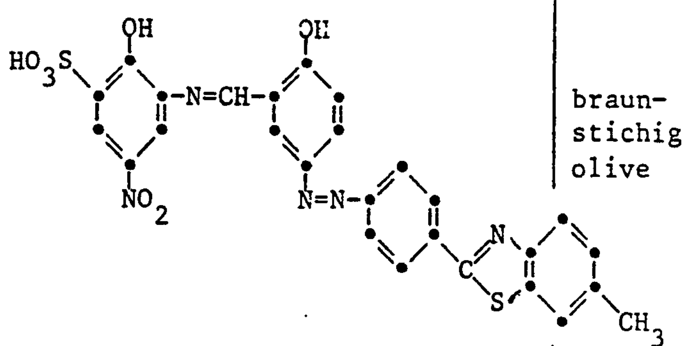 | braun-stichig olive |
| 15 | 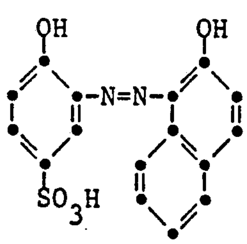 | do | olive-stichig braun |

| N° | Azofarbstoff | Azomethinfarbstoff | Nuance |
|---|---|---|---|
| 16 | 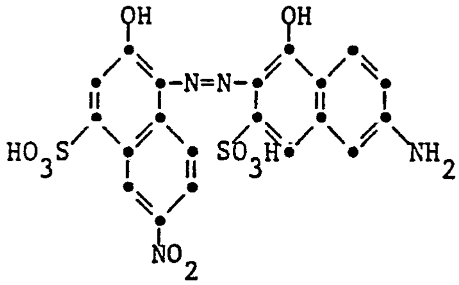 | 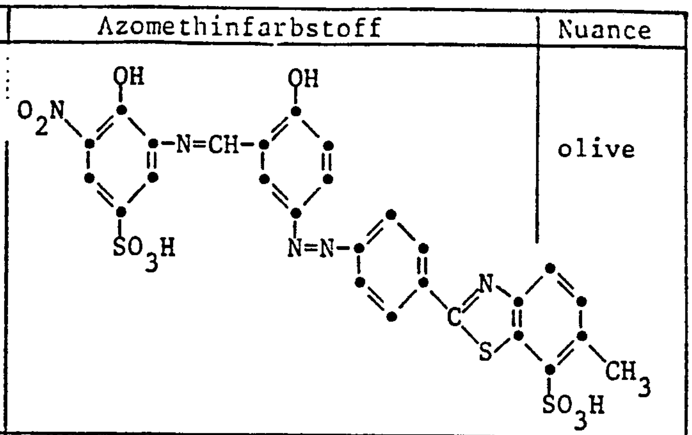 | olive |
| 17 | 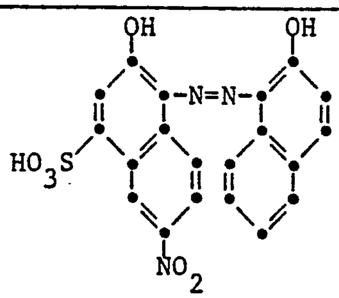 | 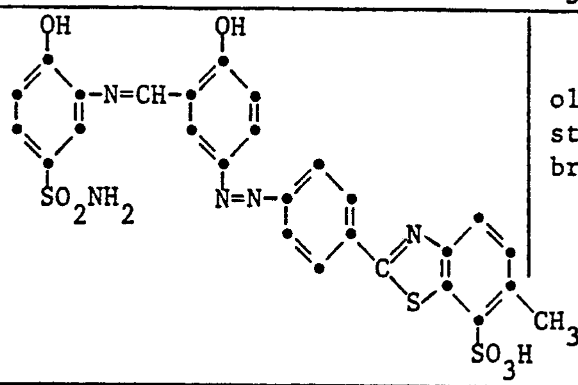 | olive-stichig braun |
| 18 | 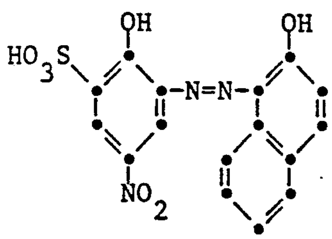 | do | braun-stichig olive |
| 19 | 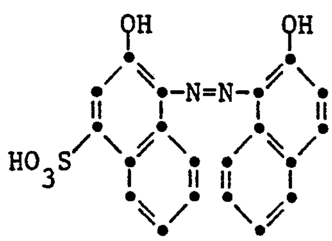 | do | olive |
| 20 | do | 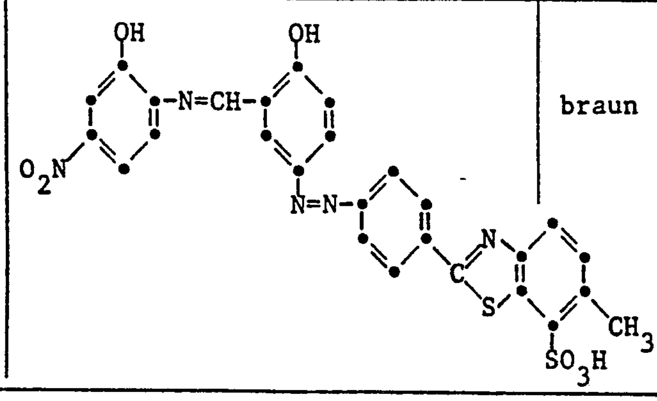 | braun |

| N° | Azofarbstoff | Azomethinfarbstoff | Nuance |
| --- | --- | --- | --- |
| 21 | 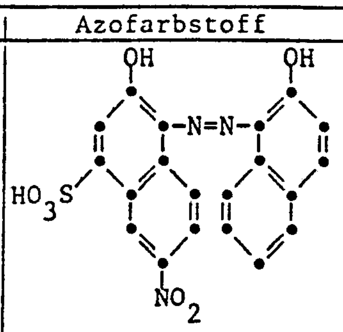 | 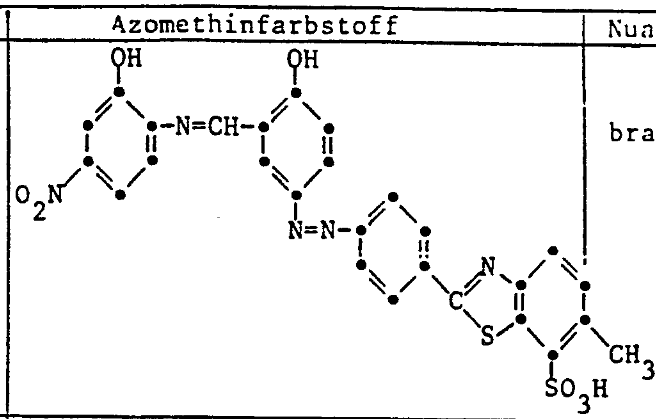 | braun |
| 22 | 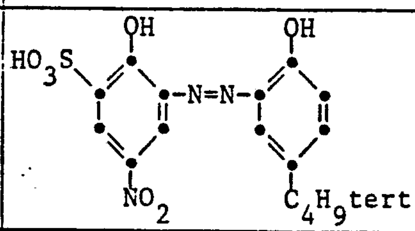 | do | braun |
| 23 | 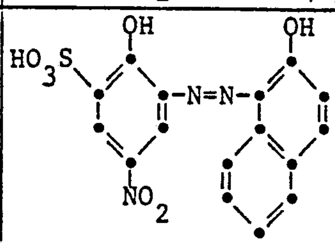 | do | braun |
| 24 | 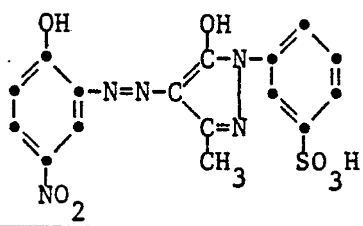 | do | braun-sticnig orange |
| 25 | 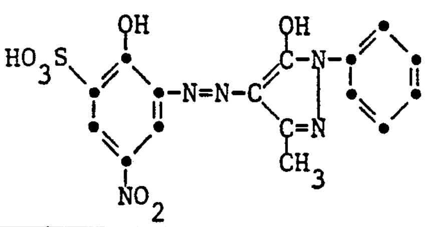 | do | braun-stichig orange |
| 26 | 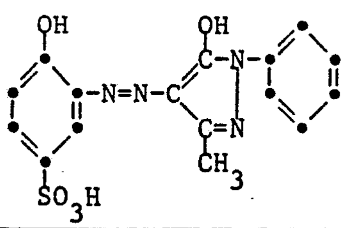 | do | braun-stichig orange |

| N° | Azofarbstoff | Azomethinfarbstoff | Nuance |
|---|---|---|---|
| 27 | 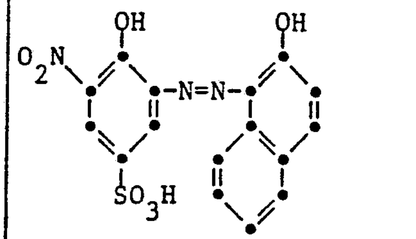 | 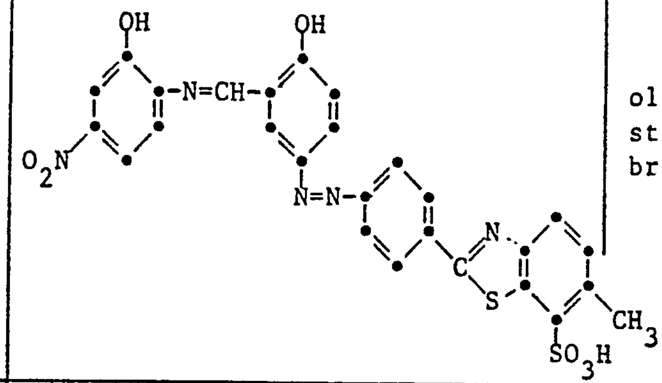 | olive-stichig braun |
| 28 | 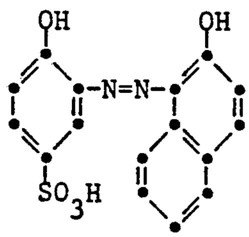 | do | braun |
| 29 | 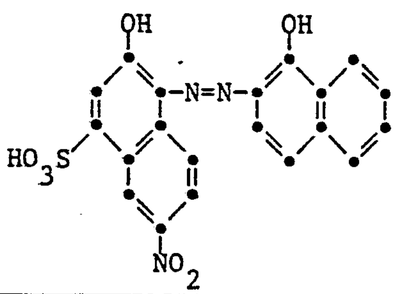 | do | braun |
| 30 | 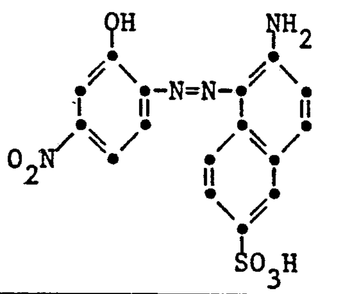 | do | olive-braun |
| 31 | 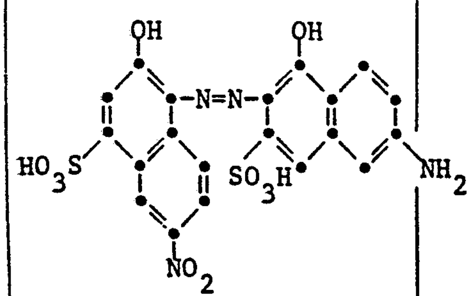 | do | olive |

| N° | Azofarbstoff | Azomethinfarbstoff | Nuance |
|---|---|---|---|
| 32 | 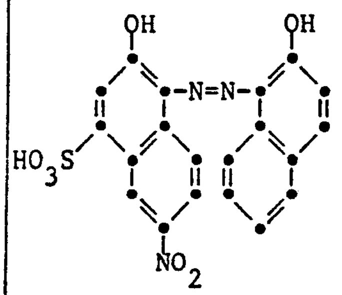 | 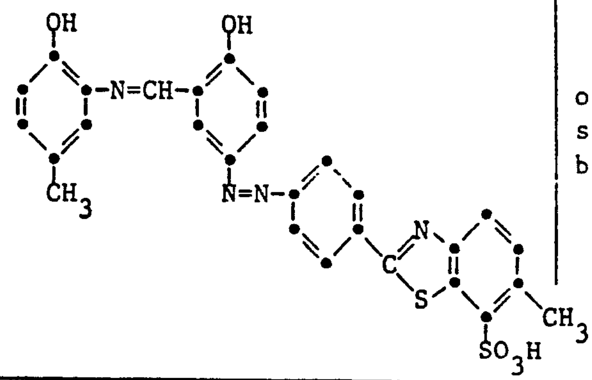 | olive-stichig braun |
| 33 | 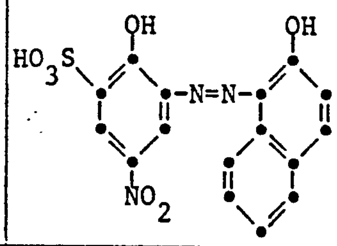 | do | braun |
| 34 | 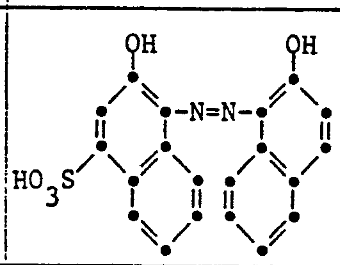 | do | olive |
| 35 | 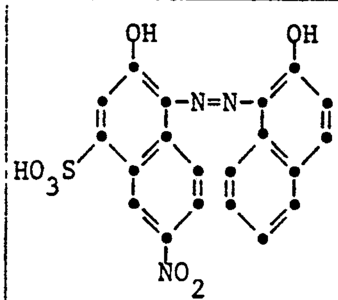 | 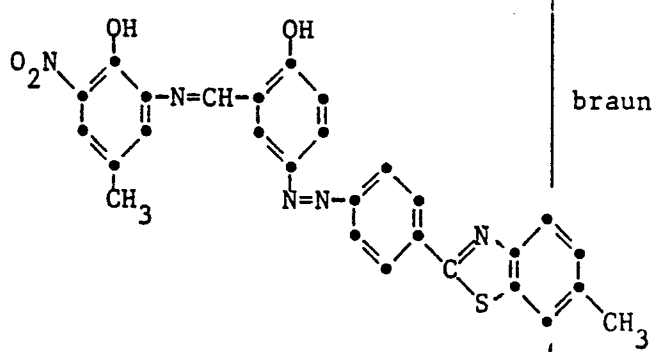 | braun |
| 36 | 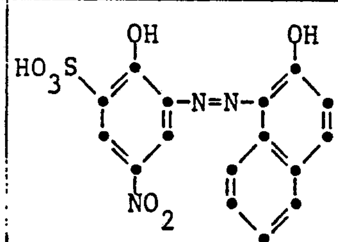 | 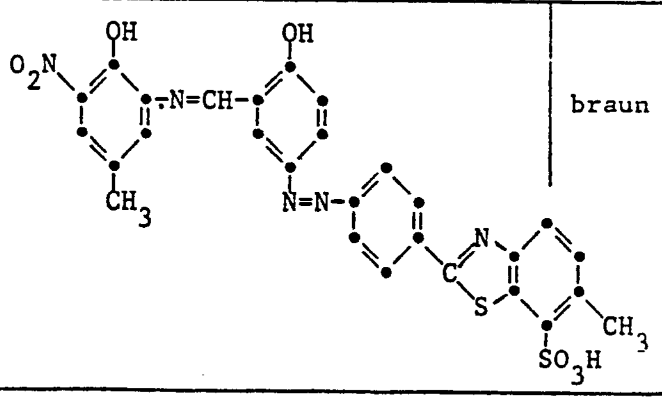 | braun |

| N° | Azofarbstoff | Azomethinfarbstoff | Nuance |
|---|---|---|---|
| 37 | 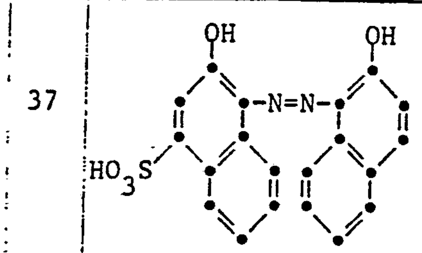 | 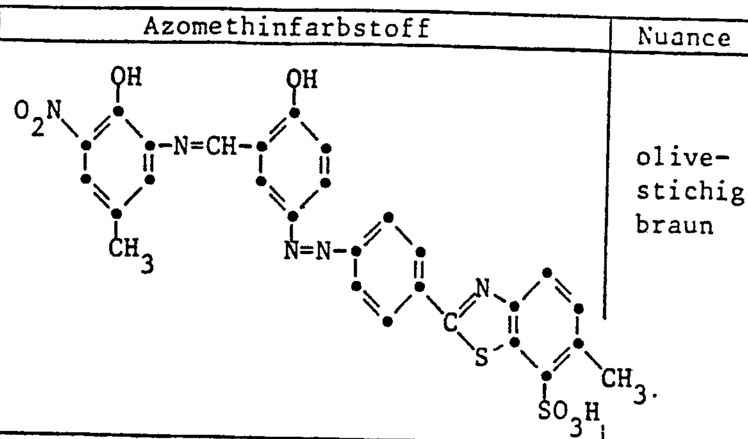 | olive-stichig braun |
| 38 | 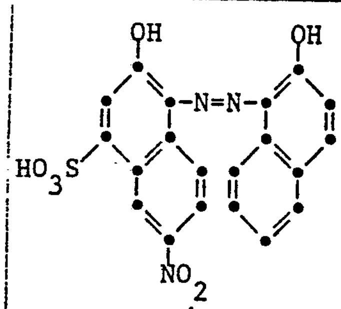 | 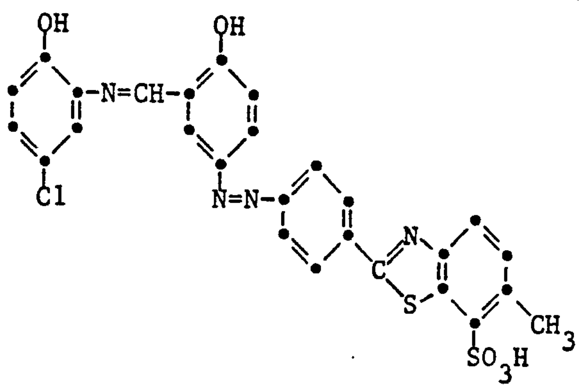 | braun |
| 39 | 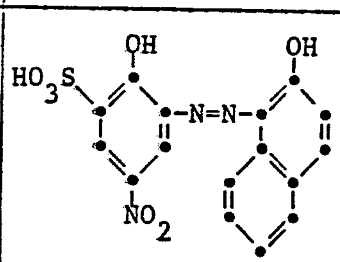 | do | braun |
| 40 | 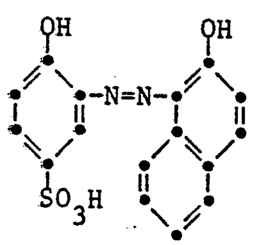 | do | braun |

| N° | Azofarbstoff | Azomethinfarbstoff | Nuance |
|---|---|---|---|
| 41 | 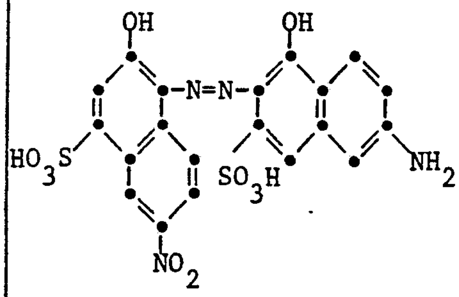 | 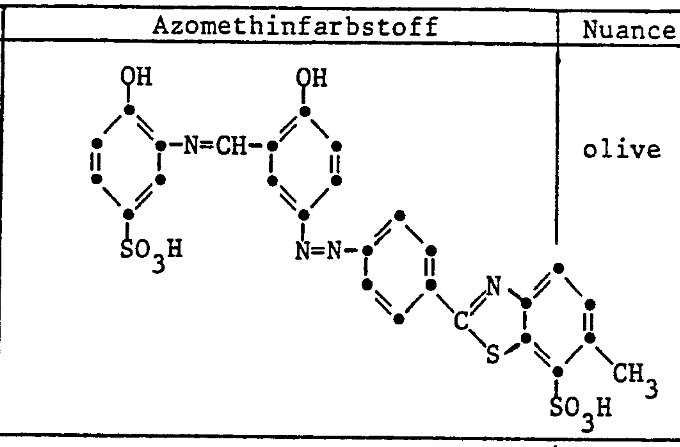 | olive |
| 42 | 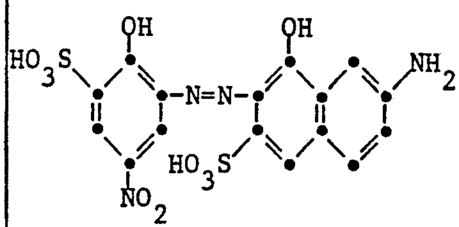 | do | olive |
| 43 | do | 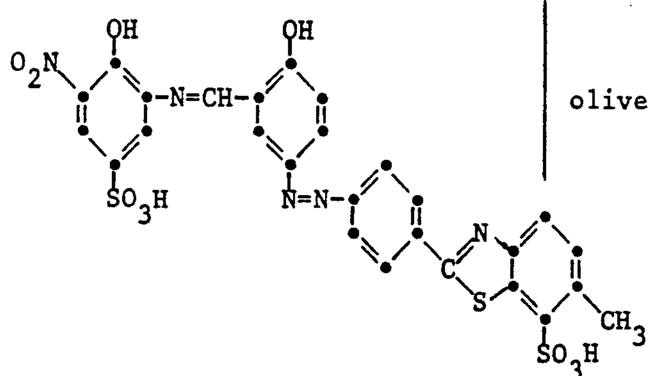 | olive |
| 44 | do | 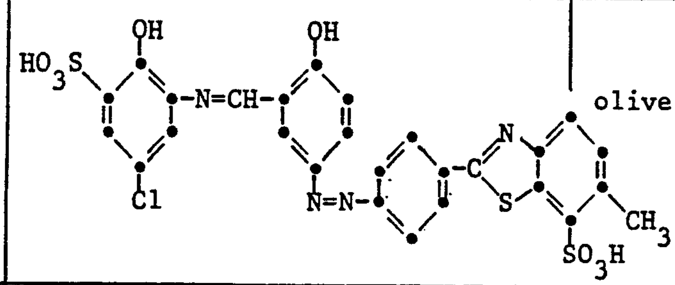 | olive |
| 45 | do | 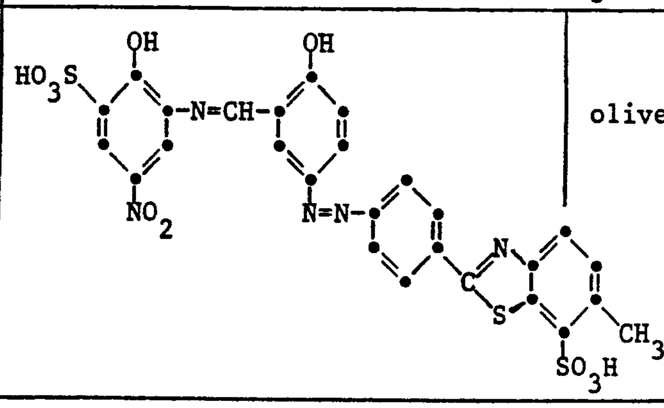 | olive |

| N° | Azofarbstoff | Azomethinfarbstoff | Nuance |
|---|---|---|---|
| 46 | 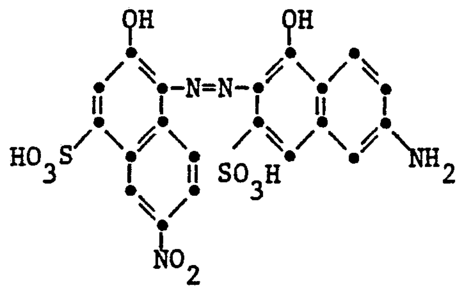 | 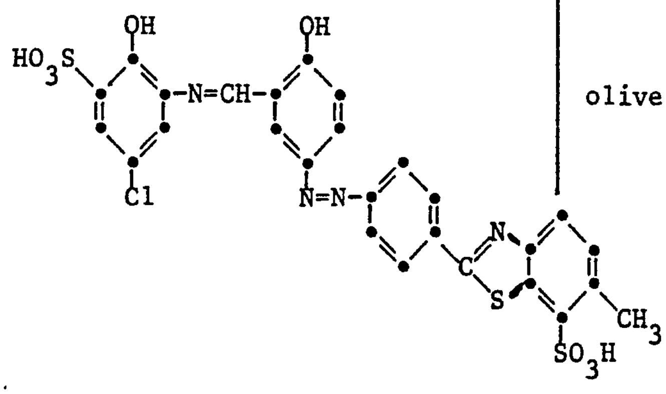 | olive |

**Beispiel 5**

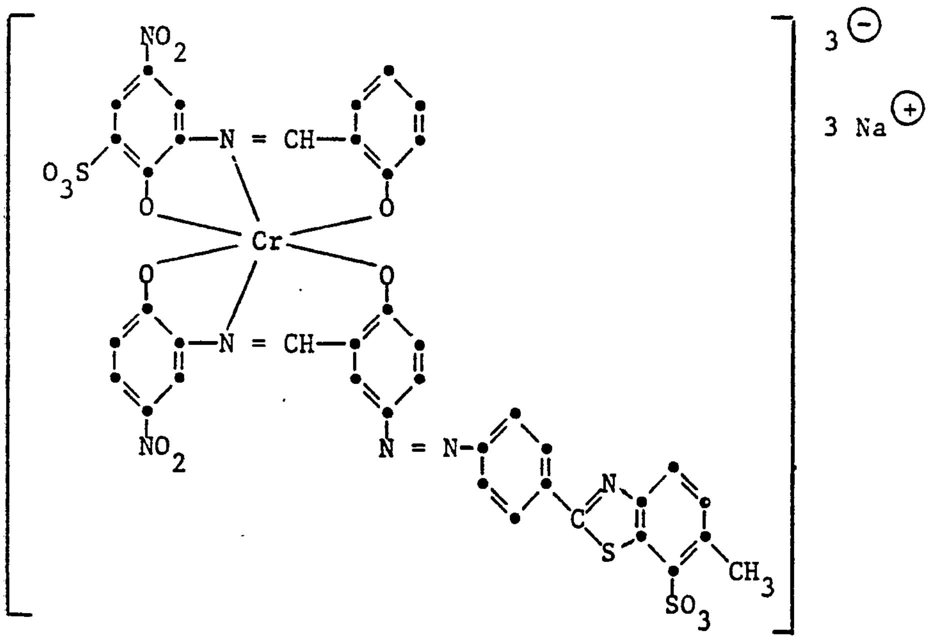

Der 1 : 1-Chromkomplex, der 33,8 Teile des Azomethinfarbstoffes aus 4-Nitro-2-amino-1-hydroxybenzol-6-sulfosäure und Salicylaldehyd sowie 5,2 Teile Chrom enthält, wird in 600 Teile Wasser eingetragen und mit 15,4 Teilen 4-Nitro-2-amino-1-hydroxybenzol und 45,3 Teilen des Monoazofarbstoffs aus diazotierter Dehydrothio-p-toluidin-7-sulfonsäure und Salicylaldehyd versetzt. Das Reaktionsgemisch wird hierauf auf 80 bis 85° erwärmt, mit Natriumhydroxid auf pH 7 gestellt und so lange bei dieser Temperatur und konstantem pH gehalten, bis die Anlagerungsreaktion beendet ist. Hierauf wird der chromhaltige Farbstoff durch Eindampfen isoliert. Er stellt ein braunes Pulver dar, das sich in Wasser mit oranger Farbe löst und Leder in gelbstichig orangen Tönen von guten Echtheiten färbt.

Ersetzt man im obigen Beispiel die 15,4 Teile 4-Nitro-2-amino-1-hydroxybenzol durch 23,4 Teile 4-Nitro-2-amino-1-hydroxybenzol-6-sulfonsäure, so erhält man einen Farbstoff, der ebenfalls Leder in echten orangen Tönen färbt.

**Beispiel 6**

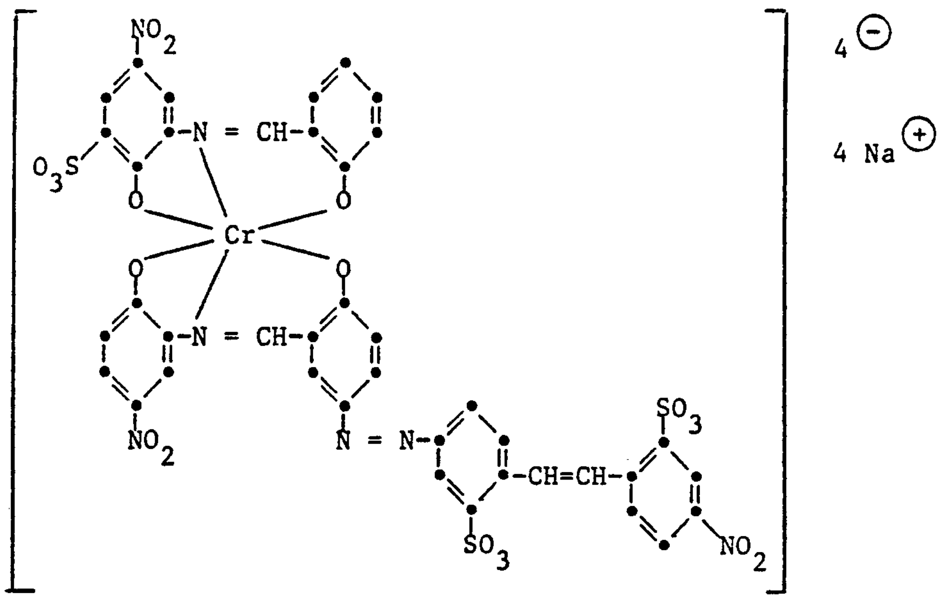

Der 1 : 1-Chromkomplex, der 33,8 Teile des Azomethinfarbstoffs aus 4-Nitro-2-amino-1-hydroxybenzol-6-sulfonsäure und Salicylaldehyd sowie 5,2 Teile Chrom enthält, wird in 600 Teile Wasser eingetragen und mit 15,4 Teilen 4-Nitro-2-amino-1-hydroxybenzol und 53,3 Teilen des Monoazofarbstoffes aus diazotierter 4'-Nitro-4-aminostilben-2,2'-disulfonsäure und Salicylaldehyd versetzt. Hierauf wird das Reaktionsgemisch auf 80 bis 85° erwärmt, mit 5n Natriumhydroxid auf pH 7 gestellt und so lange bei dieser Temperatur und konstantem pH gehalten, bis die Anlagerungsreaktion beendet ist.

Der chromhaltige Farbstoff wird durch Eindampfen isoliert. Er stellt ein braunes Pulver dar, das sich in Wasser mit gelbstichig oranger Farbe löst und Leder in gelbstichig orangen, echten Tönen färbt.

**Beispiel 7**

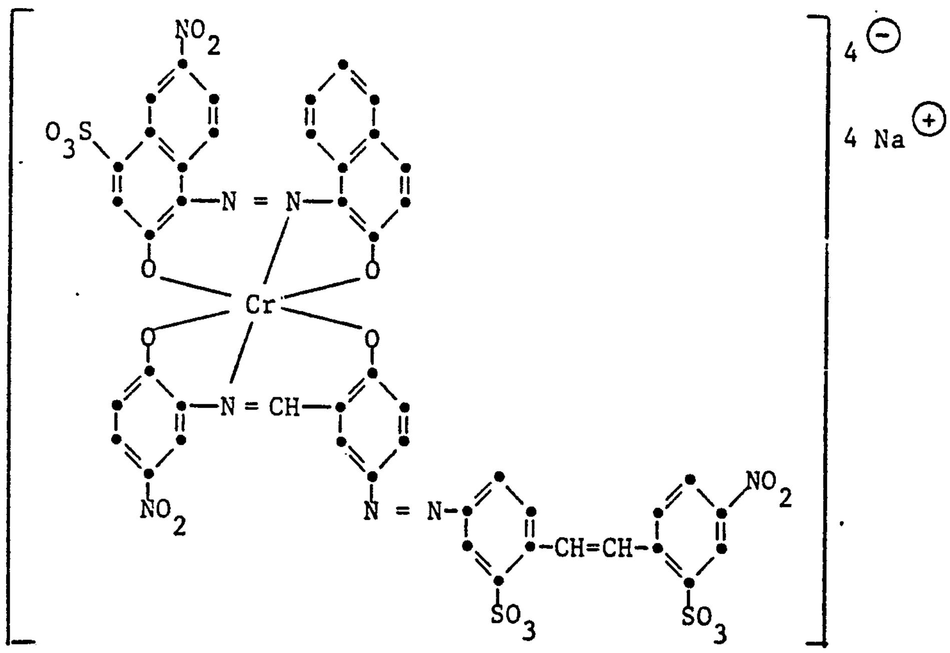

In 600 Teilen Wasser suspendiert man 48,9 Teile der komplexen Chromverbindung vom Typus 1 Atom Chrom: 1 Molekül Farbstoff, welche 5,2 Teile Chrom und 43,9 Teile Monoazofarbstoff aus 6-Nitro-1-amino-2-hydroxynaphthalin-4-sulfonsäure und 2-Hydroxynaphthalin enthält, mit 15,4 Teilen 4-Nitro-2-amino-1-hydroxybenzol und 53,3 Teilen des Monoazofarbstoffs aus diazotierter 4'-Nitro-4-aminostilben-2'2-disulfonsäure und Salicylaldehyd. Das Reaktionsgemisch wird auf 80 bis 85° erwärmt, mit 5n Natriumhydroxid auf pH ca. 7 gestellt und so lange bei dieser Temperatur und konstantem pH gehalten, bis die Anlagerungsreaktion beendet ist. Hierauf isoliert man den Farbstoff durch Eindampfen. Er stellt ein dunkles Pulver dar, das sich in Wasser mit brauner Farbe löst und Leder in echten, braunen Tönen färbt.

Arbeitet man wie im Beispiel 7 beschrieben, verwendet jedoch den 1 : 1-Chromkomplex des in der folgenden Tabelle in Spalte 2 aufgeführten Azofarbstoffs und setzt diesen mit dem in Spalte 3 aufgeführten Azomethinfarbstoff, bzw. mit dem diesen bildenden Amin und Aldehyd um, so erhält man 1 : 2-Chromkomplexe, welche Leder in der in Spalte 4 angegebenen Nuance färben.

Tabelle

| N° | Azofarbstoff | Azomethinfarbstoff | Nuance |
|---|---|---|---|
| 1 | 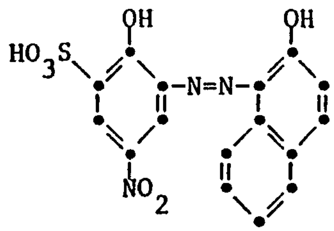 | 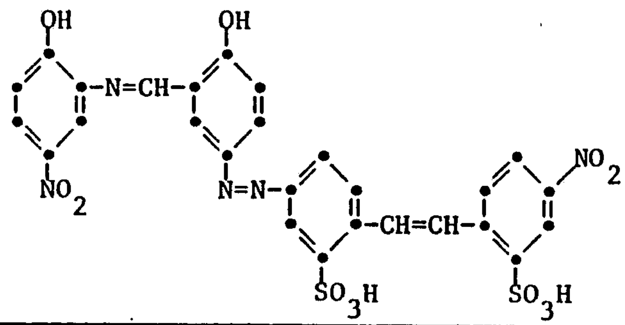 | braun |
| 2 | 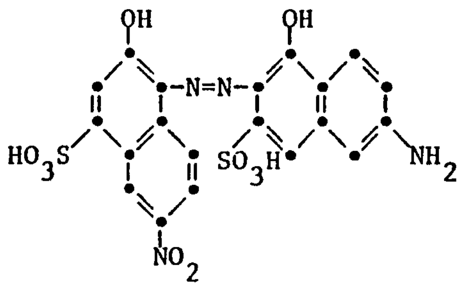 | do | olive |
| 3 | 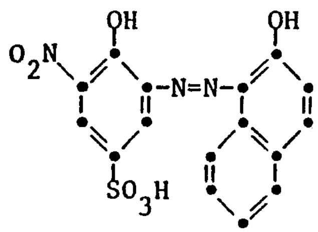 | do | braun |

| N° | Azofarbstoff | Azomethinfarbstoff | Nuance |
|---|---|---|---|
| 4 | 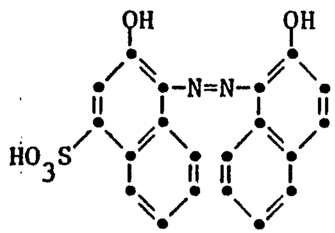 | 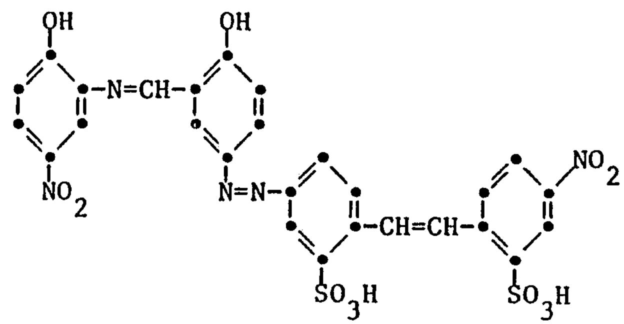 | olive-stichig braun |
| 5 | 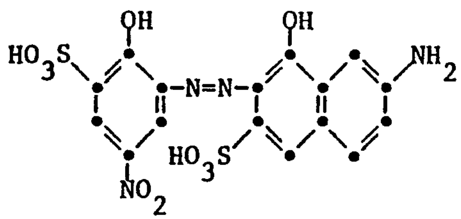 | do | braun |
| 6 | 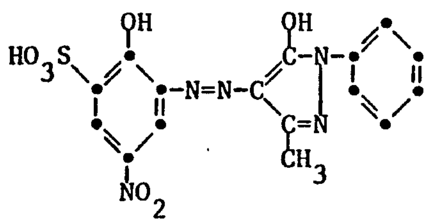 | do | orange |
| 7 | 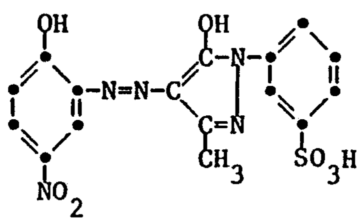 | do | orange |

| N° | Azofarbstoff | Azomethinfarbstoff | Nuance |
|---|---|---|---|
| 8 | 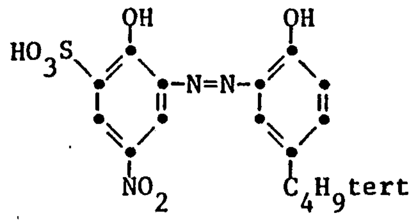 | 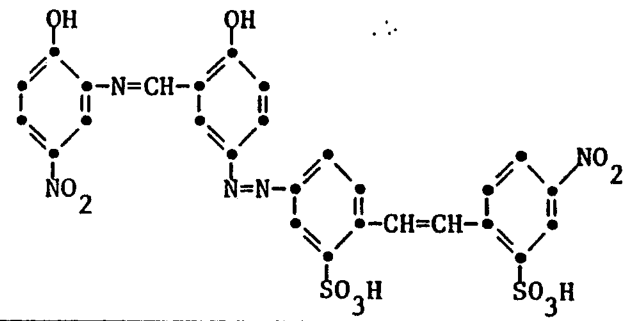 | braun |
| 9 | 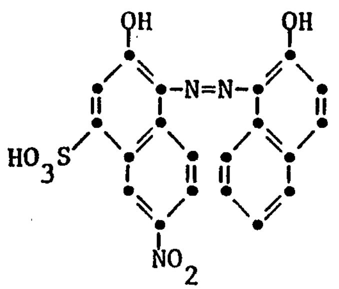 | 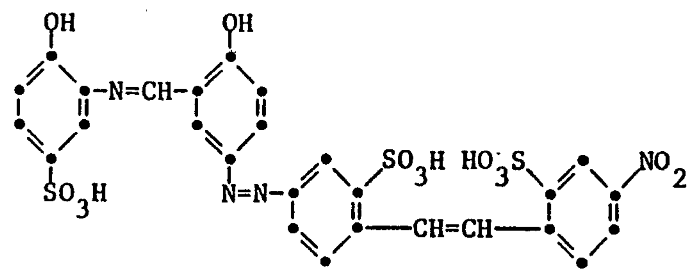 | braun |
| 10 | do | 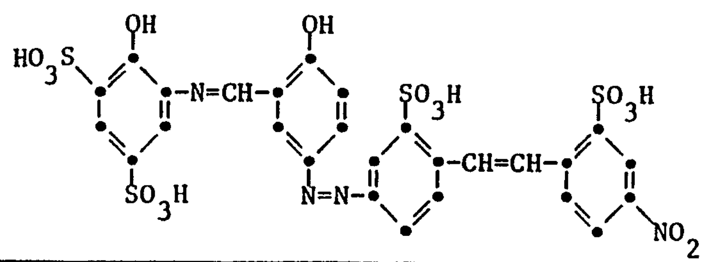 | braun |
| 11 | 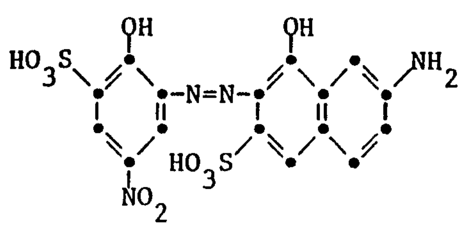 | do | braun |

| N° | Azofarbstoff | Azomethinfarbstoff | Nuance |
| --- | --- | --- | --- |
| 12 | 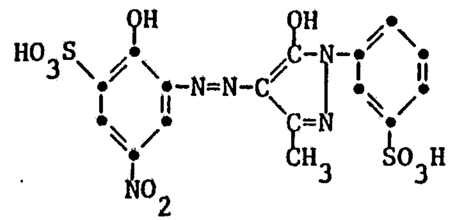 | 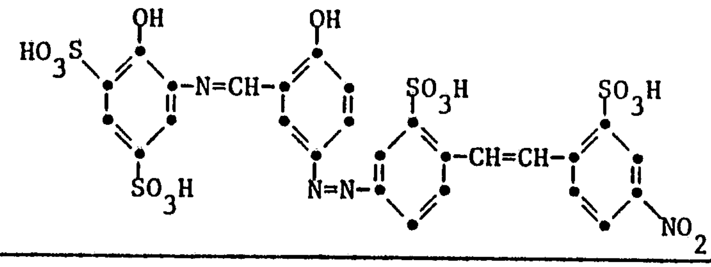 | orange |
| 13 | 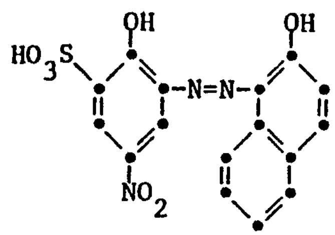 | 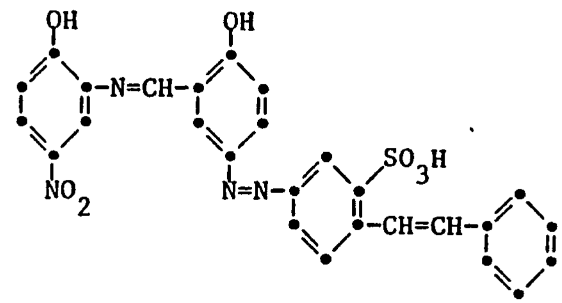 | braun |
| 14 | do | 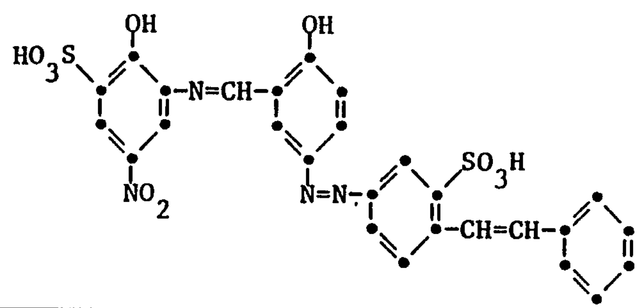 | braun |
| 15 | 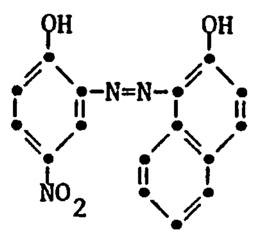 | do | braun |

| N° | Azofarbstoff | Azomethinfarbstoff | Nuance |
|---|---|---|---|
| 16 | 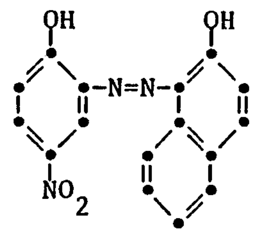 | 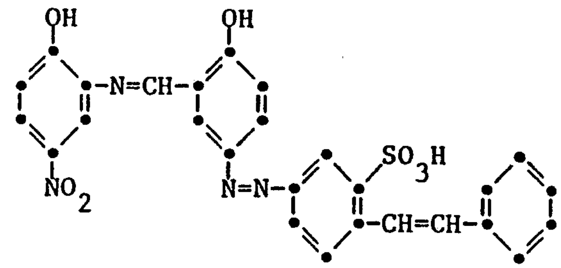 | braun |
| 17 | 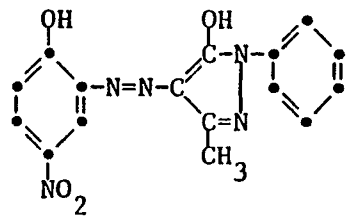 | do | orange |
| 18 | 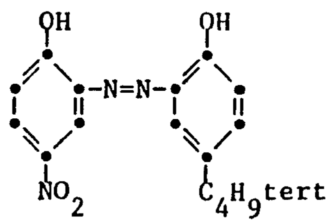 | 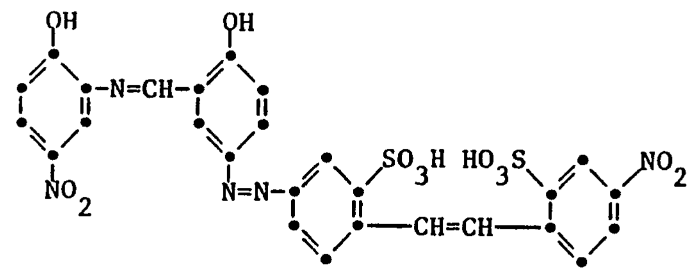 | braun |
| 19 | 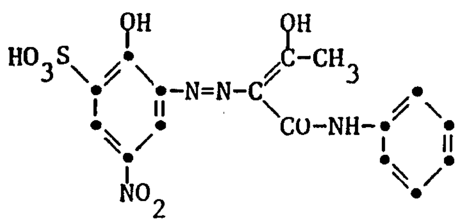 | do | gelbstichig orange |

| N° | Azofarbstoff | Azomethinfarbstoff | Nuance |
|---|---|---|---|
| 20 | 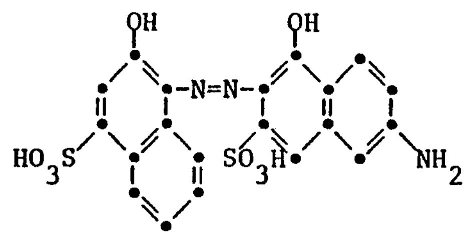 | 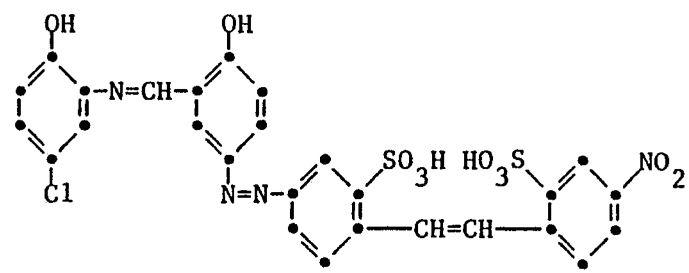 | olive |
| 21 | 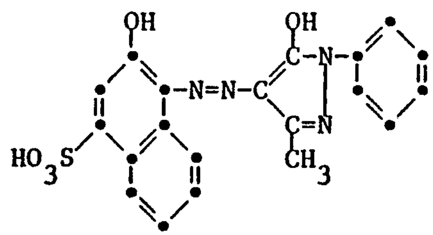 | do | rot-stichig orange |
| 22 | 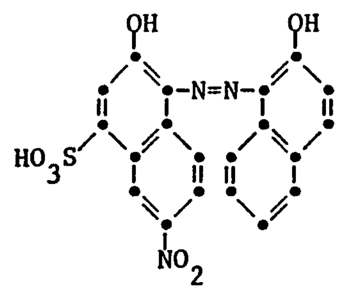 | do | braun |
| 23 | 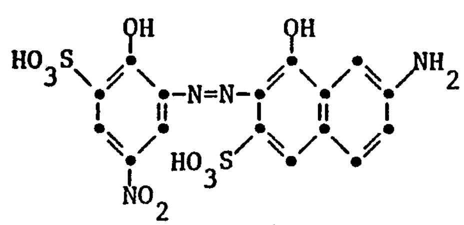 | do | olive-stichig braun |

| N° | Azofarbstoff | Azomethinfarbstoff | Nuance |
|---|---|---|---|
| 24 | 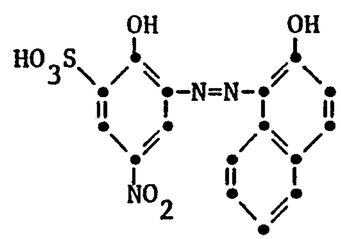 | 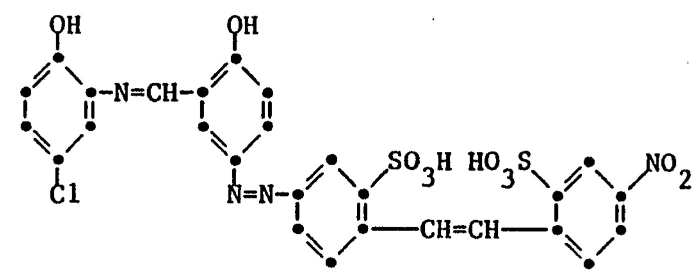 | braun |
| 25 | 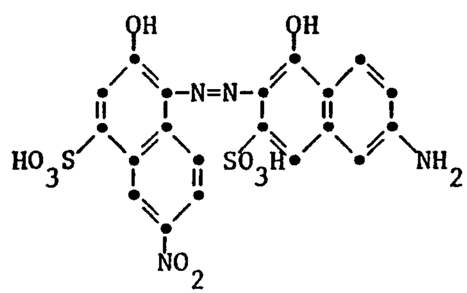 | do | olive |
| 26 | do | 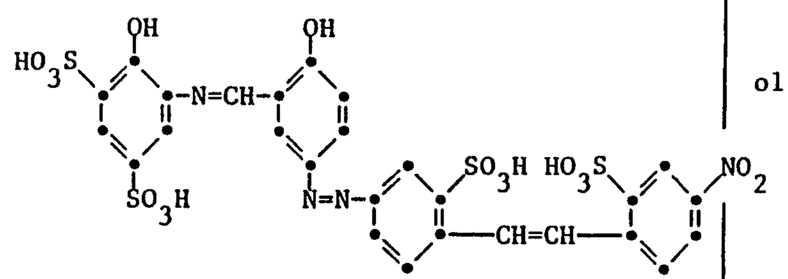 | olive |

| N° | Azofarbstoff | Azomethinfarbstoff | Nuance |
| --- | --- | --- | --- |
| 27 | 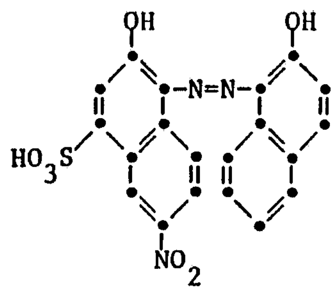 | 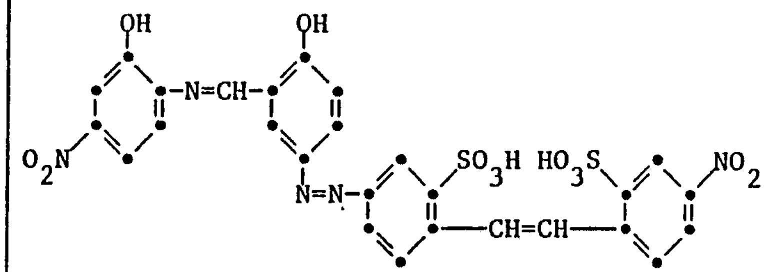 | braun |
| 28 | 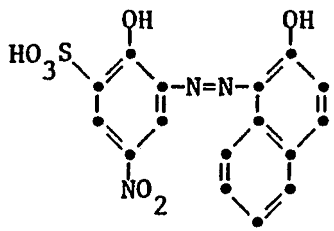 | do | braun |
| 29 | 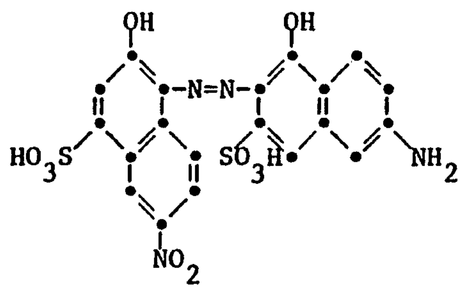 | do | braun-stichig olive |
| 30 | 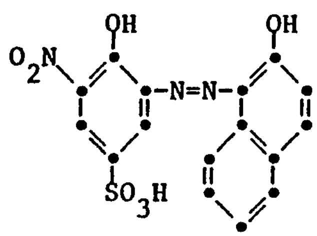 | do | braun |

| N° | Azofarbstoff | Azomethinfarbstoff | Nuance |
|---|---|---|---|
| 31 | 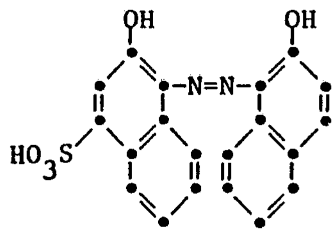 | 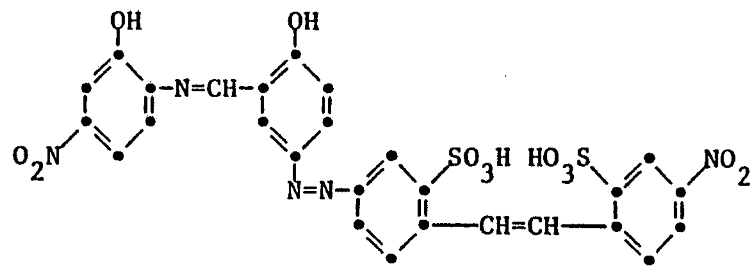 | braun |
| 32 | 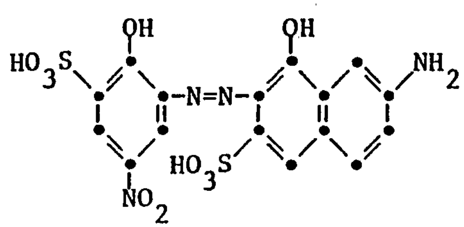 | do | braun |
| 33 | 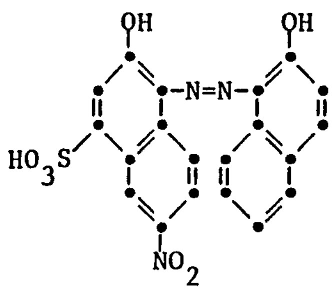 | 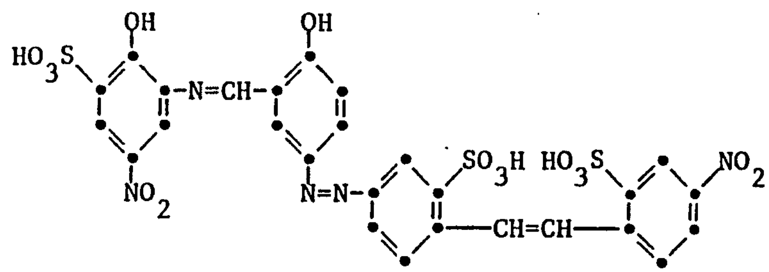 | braun |
| 34 | 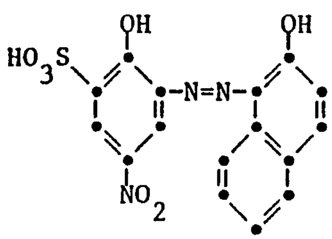 | do | braun |

| N° | Azofarbstoff | Azomethinfarbstoff | Nuance |
|---|---|---|---|
| 35 | 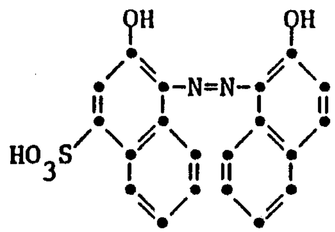 | 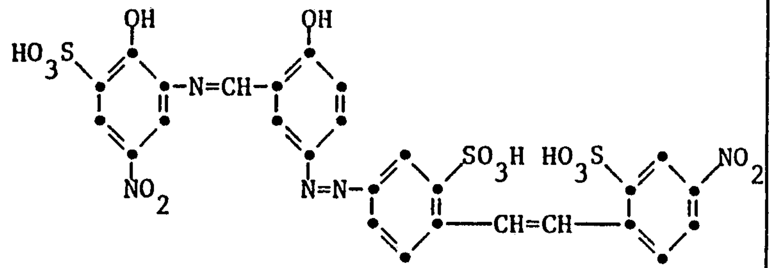 | braun-stichig olive |
| 36 | 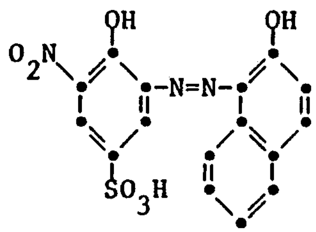 | do | braun |
| 37 | 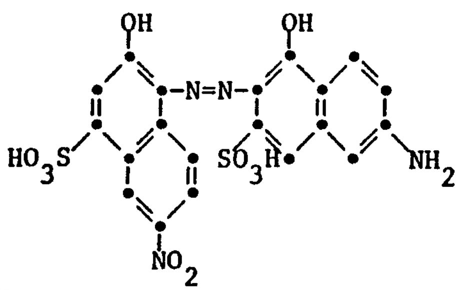 | do | olive |
| 38 | 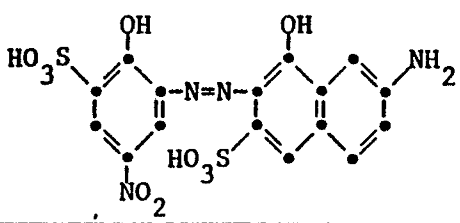 | do | olive |

| N° | Azofarbstoff | Azomethinfarbstoff | Nuance |
|---|---|---|---|
| 39 | 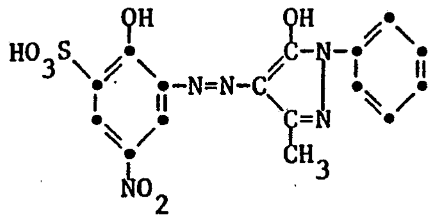 | 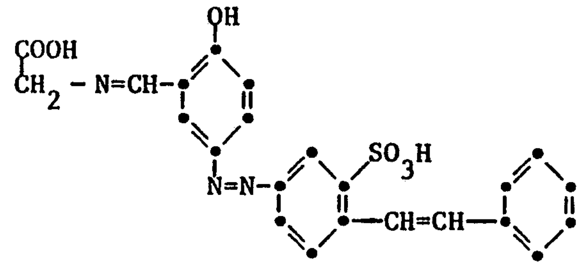 | orange |
| 40 | do | 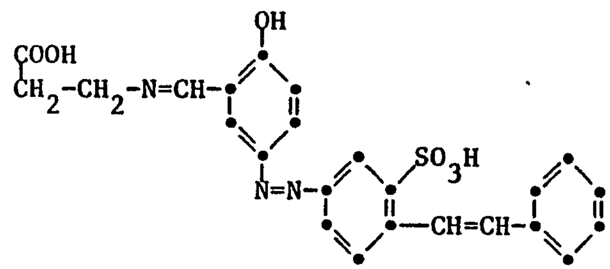 | orange |
| 41 | 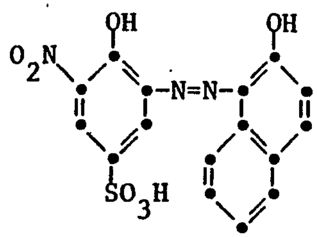 | 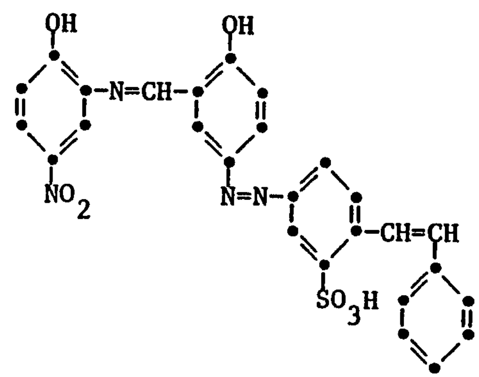 | braun-olive |

| N° | Atofarbstoff | Azomethinfarbstoff | Nuance |
| --- | --- | --- | --- |
| 42 | 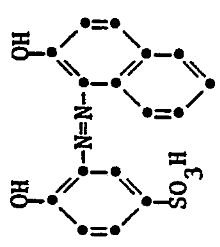 | 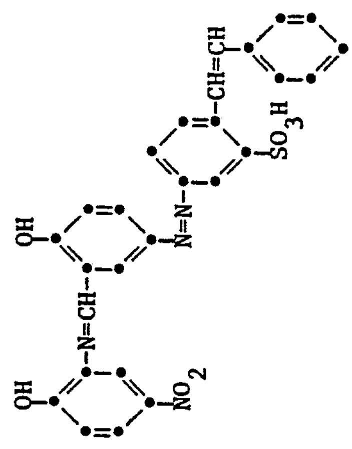 | olive |
| 43 | 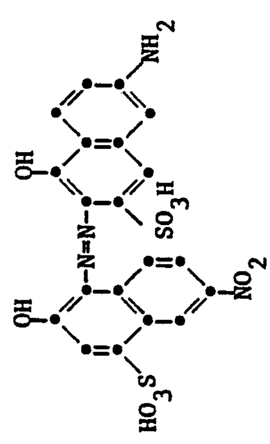 | 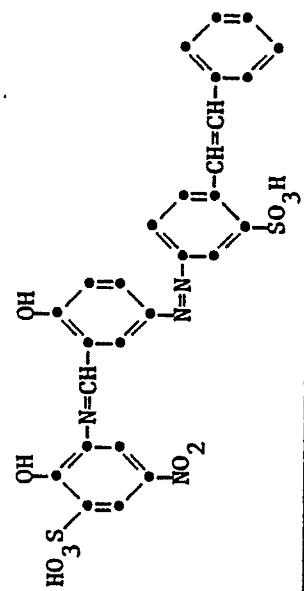 | olive |
| 44 | 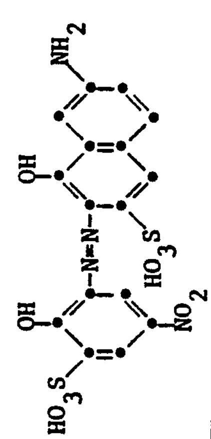 | do | braun |
| 45 | 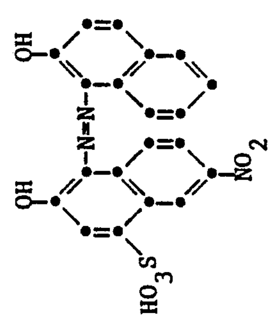 | 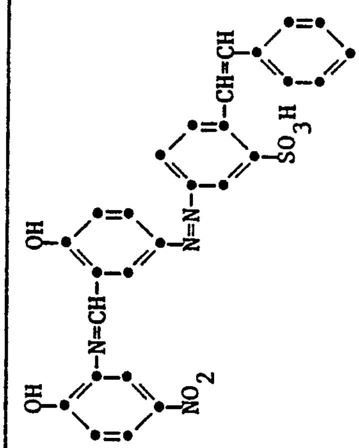 | dunkel-braun |

**Färbevorschrift für Leder**

100 Teile Bekleidungsveloursleder (Trockengewicht) werden bei 50° in einer Lösung von 1000 Volumenteilen Wasser und 2 Teilen Ammoniak 24 %-ig während 2 Stunden aufgewalkt und anschliessend bei 60° in einer Lösung von 1000 Volumenteilen Wasser, 2 Teilen Ammoniak 24 %-ig und 6 Teilen Farbstoff aus Beispiel 2 während 1 Stunde gefärbt. Hierauf gibt man eine Lösung von 40 Volumenteilen Wasser und 4 Teilen

Ameisensäure 85 %-ig zu und färbt noch weitere 30 Minuten. Dann wird das Leder gut gespült und gegebenenfalls noch mit 2 Teilen eines Dicyandiamidformaldehyd-Kondensationsproduktes während 30 Minuten bei 50° behandelt.

In gleicher Weise lassen sich andere Veloursleder sowie Handschuhleder färben.

Die so erhaltenen oliven Färbungen zeichnen sich durch gute Echtheiten und gute Deckvermögen aus.

**Färbevorschrift für Polyamid**

100 Teile Polyamidstrickgarn werden bei 50° in ein Färbebad eingeführt, das auf 4000 Teile Wasser 2 Teile des Farbstoffes des Beispiels 4, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält ein braungefärbtes Polyamid mit guten Echtheitseigenschaften.

**Färbevorschrift für Wolle**

100 Teile Wollstrickgarn werden bei 50° in ein Färbebad eingeführt, das auf 4000 Teile Wasser 2 Teile des Farbstoffs des Beispiels 4, 4 Teile Essigsäure 80 % und 2 Teile eines Egalisierhilfsmittels enthält. Die Flotte wird im Verlaufe von 45 Minuten zum Sieden gebracht und während 45 Minuten bei Kochtemperatur gehalten. Darauf wird das Färbegut herausgenommen, mit kaltem Wasser gründlich gespült und getrocknet. Man erhält eine braungefärbte Wolle mit guten Echtheitseigenschaften.

**Patentansprüche**

1. 1 : 2-Chromkomplexfarbstoffe der Formel I

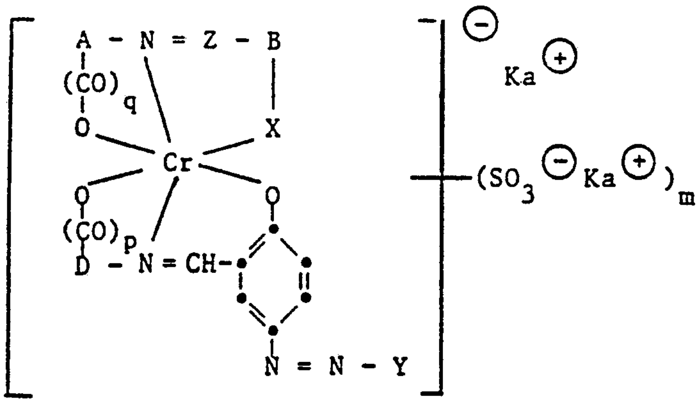

(I),

worin

Z Stickstoff oder eine CH-Gruppe,

A einen Rest der Benzol- oder Naphthalinreihe, welche in o-Stellung zur Azo- oder Azomethingruppe eine Hydroxy- oder Carboxygruppe trägt,

D den Rest eines o-Aminophenols oder, falls p = 1 ist, den Rest einer aliphatischen, cycloaliphatischen oder aromatischen Aminocarbonsäure,

B den Rest einer Kupplungskomponente, wenn Z Stickstoff ist, wobei die Kupplungskomponente in o- bzw. α-Stellung zur Azogruppe die Gruppe X enthält, oder den Rest eines o-Hydroxybenzaldehyds oder o-Hydroxynaphthaldehyds, wenn Z die -CH-Gruppe darstellt,

X Sauerstoff oder, wenn Z Stickstoff ist, auch eine Gruppe der Formel -NR-, worin R Wasserstoff oder eine $C_1$-$C_4$-Alkylgruppe bedeutet,

Y einen Rest der Formel II

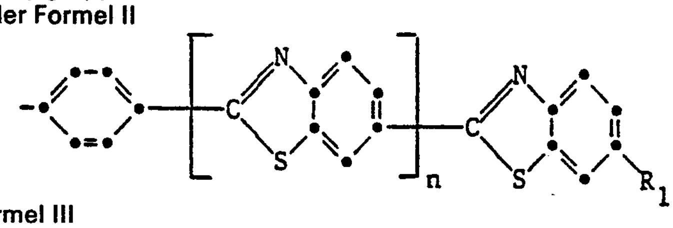

(II)

oder der Formel III

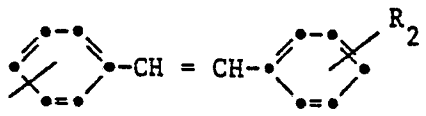

(III)

wobei
n 0 oder 1,
$R_1$ Wasserstoff oder Methyl und
$R_2$ Wasserstoff, Nitro, Chlor, $C_1$-$C_4$-Alkyl, $C_1$-$C_4$-Alkoxy oder Acetylamino,
m eine ganze Zahl von 1 bis 6, p 0 oder 1,
q 0 oder 1 und
$Ka^{\oplus}$ ein Kation bedeutet.

2. Farbstoffe gemäss Anspruch 1, welche 2 bis 4 Sulfogruppen enthalten.

3. Farbstoffe gemäss einem der Ansprüche 1 oder 2, worin A den Rest eines 1-Hydroxy-2-aminobenzols, welcher gegebenenfalls durch Halogen, Nitro, Sulfo, niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist, bedeutet.

4. Farbstoffe gemäss einem der Ansprüche 1 bis 3, worin Z Stickstoff ist.

5. Farbstoffe gemäss einem der Ansprüche 1 bis 4, worin Z Stickstoff ist und B ein gegebenenfalls durch Amino und/oder Sulfo substituiertes 1- oder 2-Naphthol, 1- oder 2-Naphthylamin, gegebenenfalls substituiert durch Sulfo, oder ein p-Alkyl($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann.

6. Farbstoffe gemäss einem der Ansprüche 1 bis 3, worin Z eine -CH-Gruppe bedeutet und B den Rest eines o-Hydroxybenzaldehyds oder o-Hydroxynaphthaldehyds darstellt, welcher durch niedrigmolekulares Alkyl, Halogen, Sulfo, Phenylazo, Sulfophenylazo, Naphthylazo oder Sulfonaphthylazo substituiert sein kann.

7. Farbstoffe gemäss einem der Ansprüche 1 bis 6, worin D der Rest eines 1-Hydroxy-2-aminobenzols ist, welches gegebenenfalls durch Nitro, Sulfo, Chlor, Methyl oder Methoxy weitersubstituiert ist.

8. Farbstoffe gemäss einem der Ansprüche 1 bis 7, worin Y einen Rest der Formel II bedeutet, wobei $R_1$ Methyl und n = 0 ist.

9. Farbstoffe gemäss einem der Ansprüche 1 bis 7, worin Y einen Rest der Formel III bedeutet, wobei $R_2$ Wasserstoff, Nitro, Chlor, $C_1$-$C_4$-Alkyl, $C_1$-$C_4$-Alkoxy oder Acetylamino ist.

10. Farbstoffe gemäss Ansprüchen 8 oder 9, worin Y der Rest von Dehydrothio-p-toluidin, Dehydrothio-p-toluidin-7-sulfosäure, 4-Aminostilben-2-sulfosäure oder 4-Amino-4'-nitrostilben-2,2'-disulfosäure ist.

11. Farbstoffe der Formel IV

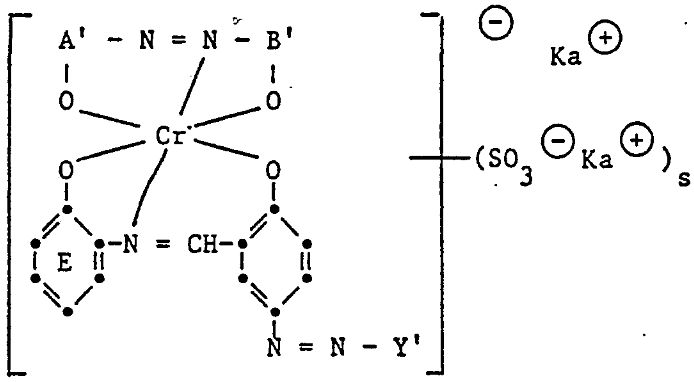

(IV)

worin
A' den Rest eines 1-Hydroxy-2-aminobenzols, welche gegebenenfalls durch Halogen, Nitro, Sulfo, niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist,
B' ein gegebenenfalls durch Amino und/oder Sulfo substituiertes 1- oder 2-Naphthol, 1- oder 2-Naphthylamin, gegebenenfalls substituiert durch Sulfo, oder ein p-Alkyl($C_1$-$C_6$)-phenol, 1-Phenyl-3-methyl-5-pyrazolon oder Acetessigsäureanilid bedeutet, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann,
Y' einen Rest der Formel V

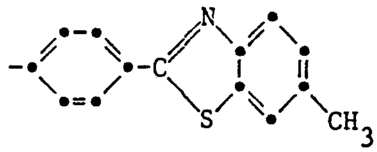

(V)

oder der Formel VI

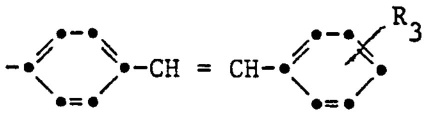

(VI)

worin $R_3$ Wasserstoff, Nitro, Chlor, Methyl, Methoxy oder Acetylamino ist, wobei die Reste V und VI eine oder zwei Sulfogruppen aufweisen können,

s 2, 3 oder 4 und

Ka⊕ ein Kation bedeutet, wobei der Ring

E gegebenenfalls substituiert ist durch Nitro, Chlor, Methyl, Methoxy oder Sulfo.

12. Verfahren zur Herstellung von Farbstoffen der Formel I, dadurch gekennzeichnet, dass man den 1 : 1-Chromkomplex des Azo- oder Azomethinfarbstoffes der Formel VII

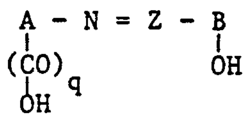

(VII)

herstellt und diesen dann mit dem Farbstoff der Formel VIII

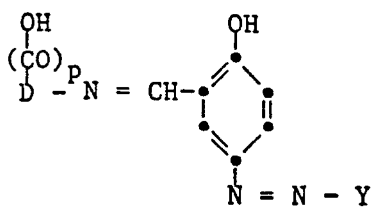

(VIII)

oder vorzugsweise mit einem Gemisch des Amins der Formel IX

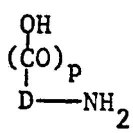

(IX)

und des Aldehyds der Formel X

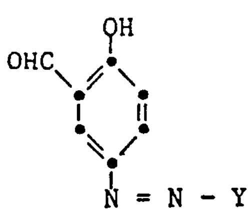

(X)

umsetzt wobei A, Z, B, D, Y, q und p die im Anspruch 1 angegebene Bedeutung aufweisen.

13. Verwendung von Farbstoffen der Formel I zum Färben von Wolle, Polyamid und insbesondere von Leder oder Pelzen.

**Claims**

1. A 1:2 chromium complex dye of the formula I

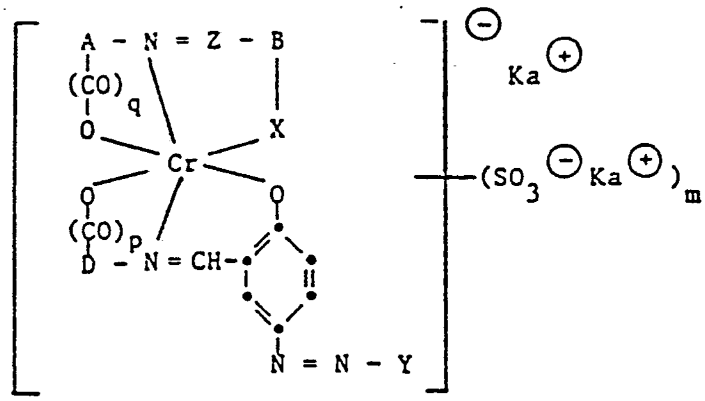

(I)

wherein

Z is a nitrogen or a CH group,

A is a radical of the benzene or naphthalene series which carries a hydroxyl or carboxyl group in the o-position with respect to the azo or azomethine group,

D is the radical of an o-aminophenol or, when p = 1, the radical of an aliphatic, cycloaliphatic or aromatic aminocarboxylic acid,

B is the radical of a coupling component when Z is nitrogen, the coupling component containing the group X in the o- or α-position with respect to the azo group, or is the radical of an o-hydroxybenzaldehyde or o-hydroxynaphthaldehyde when Z is the CH group,

X is oxygen or, when Z is nitrogen, also a group of the formula -NR-, in which R is hydrogen or a $C_1$-$C_4$alkyl group,

Y is a radical of the formula II

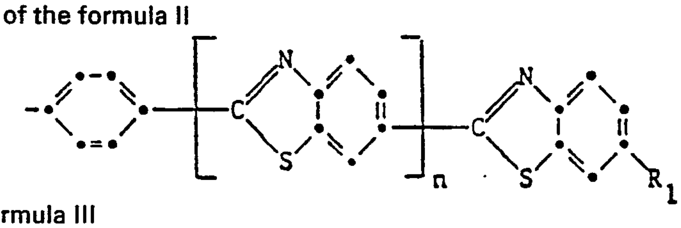

(II)

or of the formula III

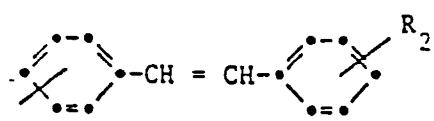

(III)

where

n is zero or 1,

$R_1$ is hydrogen or methyl, and

$R_2$ is hydrogen, nitro, chlorine, $C_1$-$C_4$alkyl, $C_1$-$C_4$alkoxy or acetylamino,

m is an integer from 1 to 6, p is zero or 1,

q is zero or 1, and

Ka⊕ is a cation.

2. A dye according to claim 1, which contains 2 to 4 sulfo groups.

3. A dye according to either claim 1 or 2, wherein A is the radical of a 1-hydroxy-2-aminobenzene, which is unsubstituted or substituted by halogen, nitro, sulfo or lower alkyl or alkoxy, or is the radical of a 1-amino-2-hydroxy-4-sulfonaphthalene, which is unsubstituted or substituted in the 6-position by chlorine, nitro or sulfo.

4. A dye according to any one of claims 1 to 3, wherein Z is nitrogen.

5. A dye according to any one of claims 1 to 4, wherein Z is nitrogen, and B is a 1- or 2-naphthol which is unsubstituted or substituted by amino and/or sulfo; a 1- or 2-naphthylamine, unsubstituted or substituted by sulfo; or a p-alkyl($C_1$-$C_6$)-phenol, 1-phenyl-3-methyl-5-pyrazolone or acetoacetic acid anilide, where the phenyl group in the two last-mentioned compounds can be substituted by $C_1$-$C_4$alkyl, $C_1$-$C_4$-alkoxy, chlorine, nitro or sulfo.

6. A dye according to any one of claims 1 to 3, wherein Z is a CH group, and B is the radical of an o-hydroxybenzaldehyde or o-hydroxynaphthaldehyde, which can be substituted by lower alkyl, halogen, sulfo, phenylazo, sulfophenylazo, naphthylazo or sulfonaphthylazo.

7. A dye according to any one of claims 1 to 6, wherein D is the radical of a 1-hydroxy-2-aminobenzene, which can be further substituted by nitro, sulfo, chlorine, methyl or methoxy.

8. A dye according to any one of claims 1 to 7, wherein Y is a radical of the formula II in which $R_1$ is methyl and n is zero.

9. A dye according to any one of claims 1 to 7, wherein Y is a radical of the formula III in which $R_2$ is hydrogen, nitro, chlorine, $C_1$-$C_4$-alkyl, $C_1$-$C_4$alkoxy or acetylamino.

10. A dye according to claim 8 or 9, wherein Y is the radical of dehydrothio-p-toluidine, dehydrothio-p-toluidine-7-sulfonic acid, 4-amino-stilbene-2-sulfonic acid or 4-amino-4'-nitrostilbene-2,2'-disulfonic acid.

11. A dye of the formula IV

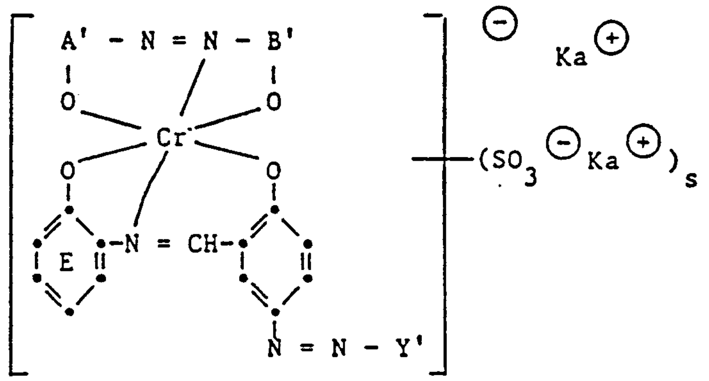

(IV)

wherein

A' is the radical of a 1-hydroxy-2-aminobenzene, which is unsubstituted or substituted by halogen, nitro, sulfo or lower alkyl or alkoxy, or is the radical of a 1-amino-2-hydroxy-4-sulfonaphthalene, which is unsubstituted or substituted in the 6-position by chlorine, nitro or sulfo.

B' is a 1- or 2-naphthol which is unsubstituted or substituted by amino and/or sulfo, or is a 1- or 2-naphthylamine, unsubstituted or substituted by sulfo, or is a p-alkyl($C_1$-$C_6$)-phenol, 1-phenyl-3-methyl-5-pyrazolone or acetoacetic acid anilide, where the phenyl group in the two last-mentioned compounds can be substituted by $C_1$-$C_4$alkyl, $C_1$-$C_4$alkoxy, chlorine, nitro or sulfo,

Y' is a radical of the formula V

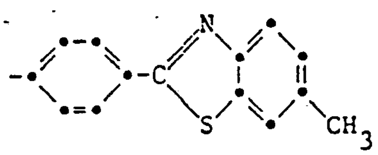

(V)

or of the formula VI

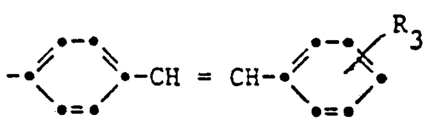

(VI)

wherein $R_3$ is hydrogen, nitro, chlorine, methyl, methoxy or acetylamino, where the radicals V and VI can contain one or two sulfo groups,

s is 2, 3, or 4, and

Ka⊕ is a cation, where the ring

E is unsubstituted or substituted by nitro, chlorine, methyl, methoxy or sulfo.

12. A process for producing a dye of the formula I, which process comprises producing the 1 : 1 chromium complex of the azo or azomethine dye of the formula VII

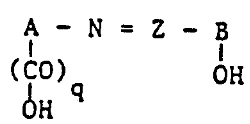

(VII)

and then reacting this with the dye of the formula VIII

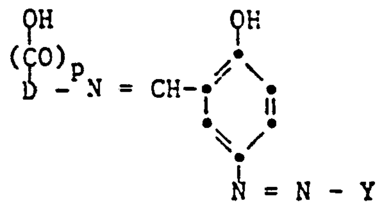

(VIII)

or preferably with a mixture of the amine of the formula IX

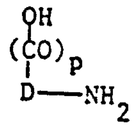

(IX)

and the aldehyde of the formula X

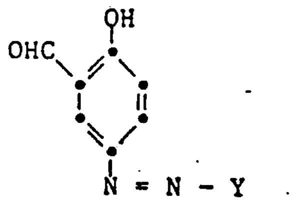

(X)

where A, Z, B, D, Y, q and p have the meanings specified in claim 1.

13. The use of a dye of the formula 1 for dyeing wool, polyamide and in particular leather or furs.

**Revendications**

1. Colorants à complexe de chrome 1 : 2 de formule I

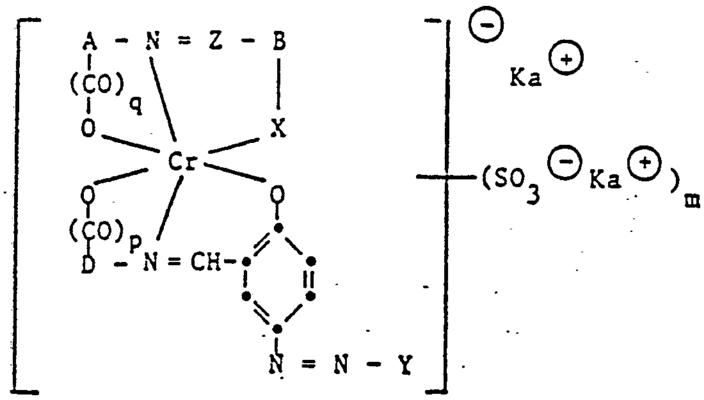

(I),

dans laquelle

Z est un atome d'azote ou un groupe CH,

A est un résidu de la série du benzène ou du naphtalène, lequel, en position ortho par rapport au groupe azoïque ou azométhine, porte un groupe hydroxy ou carboxy,

D est le résidu d'un o-aminophénol ou bien, si p = 1, le résidu d'un acide aminocarboxylique aliphatique, cycloaliphatique ou aromatique,

B est le résidu d'un composant de copulation, quand Z est un azote, auquel cas le composant de copulation comporte, en position ortho ou α par rapport au groupe azoïque, le groupe X, ou encore est le résidu d'un o-hydroxybenzaldéhyde ou d'un o-hydroxynaphtaldéhyde, quand Z représente le groupe -CH,

X est l'oxygène ou encore, quand Z est un atome d'azote, X est aussi un groupe de formule -NR-, dans laquelle R est un hydrogène ou un groupe alkyle en $C_1$-$C_4$,

Y est un radical de formule II

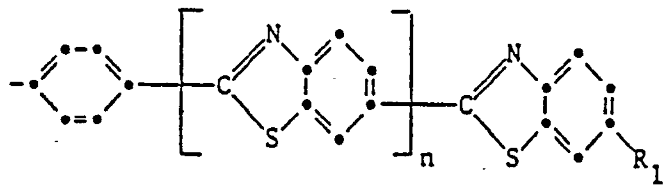

(II)

ou de formule III

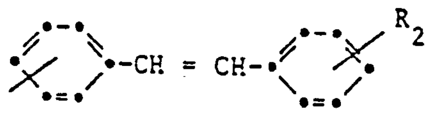

(III)

où

n vaut 0 ou 1,

$R_1$ est un hydrogène ou le radical méthyle, et

$R_2$ est un hydrogène, un radical nitro ou chloro, un radical alkyle en $C_1$-$C_4$ ou alcoxy en $C_1$-$C_4$, ou encore le radical acétylamino,

m est un nombre entier de 1 à 6, p vaut 0 ou 1,

q vaut 0 ou 1, et

Ka⊕ représente un cation.

2. Colorants selon la revendication 1, qui contiennent 2 à 4 groupes sulfo.

3. Colorants selon l'une des revendications 1 ou 2, dans lesquels A est le résidu d'un 1-hydroxy-2-aminobenzène, lequel est éventuellement substitué par un groupe halogèno, nitro, sulfo, alkyle ou alcoxy à faible masse moléculaire, ou encore représente le résidu d'un 1-amino-2-hydroxy-4-sulfonaphtalène, lequel est éventuellement substitué en position 6 par un radical chloro, nitro ou sulfo.

4. Colorants selon l'une des revendications 1 à 3, dans lesquels Z est un atome d'azote.

5. Colorants selon l'une des revendications 1 à 4, dans lesquels Z est un atome d'azote et B est un radical 1- ou 2-naphtol éventuellement substitué par un radical amino et/ou sulfo, 1- ou 2-naphtylamine, éventuellement substitué par un radical sulfo, ou encore un radical p-(alkyle en $C_1$-$C_6$)-phénol, 1-phényl-3-méthyl-5-pyrazolone ou acétoacétanilide, le groupe phényle, dans ces deux derniers composés, pouvant être substitué par un groupe alkyle en $C_1$-$C_4$, alcoxy en $C_1$-$C_4$, chloro, nitro ou sulfo.

6. Colorants selon l'une des revendications 1 à 3, dans lesquels Z est un groupe -CH-, et B est le résidu d'un o-hydroxybenzaldéhyde ou d'un o-hydroxynaphtaldéhyde, lequel peut être substitué par un radical alkyle inférieur, un radical halogéno, ou le radical sulfo, phénylazo, sulfophénylazo, naphtylazo ou sulfonaphtylazo.

7. Colorants selon l'une des revendications 1 à 6, dans lesquels D est le résidu d'un 1-hydroxy-2-aminobenzène, lequel peut éventuellement être encore substitué par le groupe nitro, sulfo, chloro, méthyle ou méthoxy.

6. Colorants selon l'une des revendications 1 à 7, dans lesquels Y est un résidu de formule II, $R_1$ étant le radical méthyle, avec n = 0.

9. Colorants selon l'une des revendications 1 à 7, dans lesquels Y est un résidu de formule III, dans laquelle $R_2$ représente un hydrogène ou un radical nitro, chloro, alkyle en $C_1$-$C_4$, alcoxy en $C_1$-$C_4$ ou acétylamino.

10. Colorants selon les revendications 8 ou 9, dans lesquels Y est le résidu de la déshydrothio-p-toluidine, de l'acide déshydrothio-p-toluidine-7-sulfonique, de l'acide 4-aminostilbène-2-sulfonique ou de l'acide 4-amino-4'-nitrostilbène-2,2'-disulfonique.

11. Colorants de formule IV

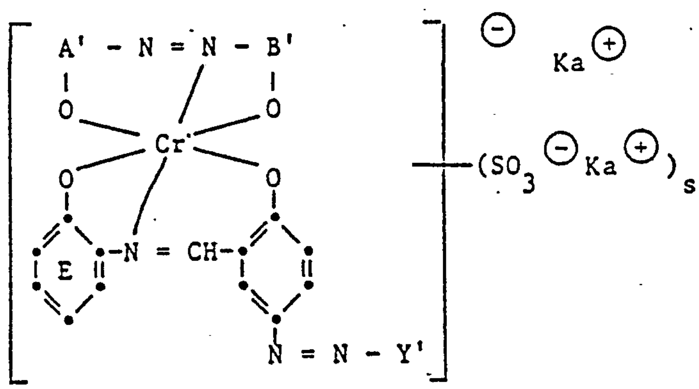

(IV)

dans laquelle

A' est le résidu d'un 1-hydroxy-2-aminobenzène, lequel est éventuellement substitué par un halogène, ou un radical nitro, sulfo, alkyle ou alcoxy inférieur, ou encore le résidu d'un 1-amino-2-hydroxy-4-sulfonaphtalène, lequel est éventuellement substitué en position 6 par un groupe chloro, nitro ou sulfo,

B' est un 1- ou 2-naphtol éventuellement substitué par un groupe amino et/ou sulfo, une 1- ou 2-naphtylamine, éventuellement substitué par un groupe sulfo, ou encore un p-(alkyle en $C_1$-$C_6$)-phénol, la 1-phényl-3-méthyl-5-pyrazolone ou l'acétoacétanilide, le groupe phényle, dans ces deux derniers composés, pouvant être substitué par un radical alkyle en $C_1$-$C_4$, alcoxy en $C_1$-$C_4$, chloro, nitro, ou sulfo,

Y' est un résidu de formule V

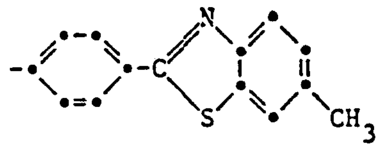

(V)

ou de formule VI

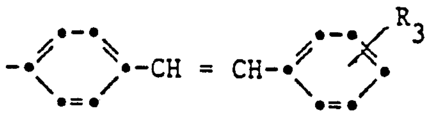

(VI)

où $R_3$ est un hydrogène ou un radical nitro, chloro, méthyle, méthoxy ou acétylamino, les résidus V et VI pouvant présenter un ou deux groupes sulfo,

s vaut 2, 3 ou 4, et

Ka⊕ est un cation,

le noyau E étant éventuellement substitué par un groupe nitro, chloro, méthyle, méthoxy ou sulfo.

12. Procédé de préparation de colorants de formule I, caractérisé en ce qu'on prépare le complexe de chrome 1 : 1 du colorant azoïque ou azométhine de formule VII

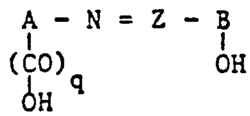

(VII)

puis qu'on fait réagir ce dernier sur le colorant de formule VIII

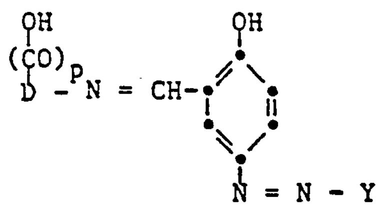

(VIII)

ou de préférence sur un mélange de l'amine de formule IX

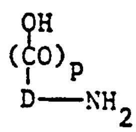

(IX)

et de l'aldéhyde de formule X

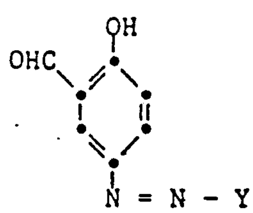

(X)

A, Z, B, D, Y, q et p ayant les significations données dans la revendication 1.

13. Utilisation de colorants de formule I pour la teinture de la laine, de polyamide et en particulier du cuir ou des peaux.